# EUROPEAN PATENT APPLICATION

(11) **EP 4 328 571 A1**
(43) Date of publication of application: **28.02.2024**
(21) Application number: 22791416.5
(22) Date of filing: 15.03.2022
(51) Int. Cl.: G01N 21/896

(54) **INSPECTION DEVICE**

(30) Priority: 22.04.2021 JP 2021072442
(71) Applicant: Hitachi Zosen Corporation, Osaka-shi, Osaka 559-8559 (JP)
(72) Inventor: OHNISHI, Fumiaki, Osaka-shi, Osaka 559-8559 (JP); SUGIMOTO, Iwao, Osaka-shi, Osaka 559-8559 (JP); OZAKI, Shuji, Osaka-shi, Osaka 559-8559 (JP); FUJIOKA, Shuji, Osaka-shi, Osaka 559-8559 (JP); SUZUKAWA, Masahiro, Osaka-shi, Osaka 559-8559 (JP)
(74) Representative: Grünecker Patent- und Rechtsanwälte PartG mbB
(86) International application number: PCT/JP2022/011654
(87) International publication number: WO 2022/224636

(57) **Abstract**

An inspection apparatus (1) detects a defect of a sheet-like or plate-like object (9) having translucency. A profile acquisition part of a defect detection part acquires a plurality of brightness profiles in a plurality of inspection regions each extending linearly in a second direction at a plurality of inspection positions in a first direction in a picked-up image. A periodic defect discrimination part detects a periodic brightness variation for each of the plurality of brightness profiles. The periodic defect discrimination part determines that a first periodic defect exists when a periodic brightness variation with the same cycle exists common to the plurality of brightness profiles and determines that a second periodic defect exists when a periodic brightness variation with the same cycle as that of a periodic brightness variation existing in one of the plurality of brightness profiles does not exist in the other brightness profiles. It is thereby possible to detect a defect while automatically discriminating the type of the defect.

## Description

### TECHNICAL FIELD

The present invention relates to an inspection apparatus for detecting a defect of a sheet-like or plate-like object having translucency.

### [CROSS REFERENCE TO RELATED APPLICATION]

The present application claims the benefit of priority to Japanese Patent Application No. 2021-072442 filed on April 22, 2021, the content of which is incorporated herein by reference in its entirety.

### BACKGROUND ART

Conventionally, a technique for continuously manufacturing a sheet-like or plate-like member has been known. In a roll forming apparatus disclosed in Japanese Patent Application Laid Open Gazette No. 2010-46798 (Document 1), for example, a molten resin extruded from a die is continuously transferred while being sandwiched between rolls, to thereby continuously form a sheet-like member.

On the other hand, various techniques for inspecting a sheet-like member which is continuously manufactured are proposed. In an inspection method disclosed in Japanese Patent Application Laid Open Gazette No. 2007-211092 (Document 2), for example, a sheet-like film is disposed between a light source and a screen, being inclined with respect to the screen, and an image projected on the screen is captured by a camera disposed on the side of the film, to thereby inspect uneven thickness of the film, which is caused by gentle wavy projections and depressions on a surface of the film. Further, in a measurement method disclosed in Japanese Patent Application Laid Open Gazette No. 2019-191112 (Document 3), by repeating image acquisition while changing a tilt angle of a sheet-like object disposed being inclined with respect to a screen, a plurality of images to be used to inspect the object are acquired. In an inspection apparatus disclosed in Japanese Patent Application Laid Open Gazette No. 2003-172707 (Document 4), light is emitted onto a polarizing film to which an anti-reflection film is attached, from vertically above, and an image projected on a screen disposed vertically below the polarizing film is captured by a camera disposed vertically below the screen, to thereby detect a scratch on the anti-reflection film.

In the inspection method disclosed in Document 2, in order to avoid the camera from being reflected in the screen, the camera is diagonally disposed so that an optical axis of the camera is inclined with respect to a normal direction of the screen. For this reason, since the distance from the camera is different, depending on the position on the screen, there arises distortion in the image picked up by the camera and it is difficult to detect the uneven thickness with high accuracy. Also in the measurement method disclosed in Document 3, the camera is disposed diagonally with respect to the normal direction of the screen.

On the other hand, in Document 4, unlike in Documents 2 or 3, the polarizing film and the screen are disposed in parallel with each other, and a mechanism or the like for disposing the polarizing film to be inclined is not provided. Further, even if the polarizing film is inclined with respect to the screen, since the distance from the screen is different, depending on the position on the polarizing film, there arises distortion in the image projected on the screen and it is difficult to detect a scratch with high accuracy.

Further, in recent years, the sheet-like member as described above is also used for optical uses such as a surface substrate of a liquid crystal display or the like. In the sheet-like member for optical uses, especially, required is reduction of defects in manufacturing the sheet-like member. For this reason, in a manufacturing apparatus of the sheet-like member, needed is high-precision adjustment in order to reduce defects. On the other hand, in manufacturing the sheet-like member, not only the uneven thickness or the scratch but also various types of defects can occur. In the manufacturing apparatus of the sheet-like member, depending on the types of these defects, an adjustment portion and/or an adjustment method are different. Therefore, in order to adjust the manufacturing apparatus of the sheet-like member with high efficiency, it is necessary to discriminate the type of the defect in the sheet-like member.

### SUMMARY OF THE INVENTION

The present invention is intended for an inspection apparatus for detecting a defect of a sheet-like or plate-like object having translucency, and it is an object of the present invention to detect a defect while automatically discriminating the type of the defect.

The inspection apparatus according to one preferred embodiment of the present invention includes an object holding part for holding an object, an auxiliary member holding part for holding a sheet-like or plate-like image pickup auxiliary member to be parallel to the object, a lighting part for emitting observation light to the object, an image pickup part disposed on the opposite side to the object with the image pickup auxiliary member interposed therebetween, having an optical axis parallel to a normal direction of the object, for acquiring a picked-up image by picking up an image formed on the image pickup auxiliary member with the observation light transmitted through the object, and a defect detection part for detecting a defect of the object on the basis of the picked-up image. A defect detectable by the defect detection part includes a first periodic defect including a plurality of streaks each extending linearly along a first direction and being periodically arranged in a second direction perpendicular to the first direction on the object, and a second periodic defect including non-streaks which are periodically arranged in the second direction on the object. The defect detection part includes a profile acquisition part for setting a plurality of inspection regions each extending linearly in parallel with the second direction at a plurality of inspection positions, respectively, in the first direction and acquiring a plurality of brightness profiles each representing a brightness change in the second direction, in the plurality of inspection regions, respectively, in the picked-up image, and a periodic defect discrimination part for detecting a periodic brightness variation for each of the plurality of brightness profiles, to determine that a first periodic defect exists when a periodic brightness variation with the same cycle exists common to the plurality of brightness profiles and determine that a second periodic defect exists when a periodic brightness variation with the same cycle as that of a periodic brightness variation existing in one of the plurality of brightness profiles does not exist in the other brightness profiles.

In the inspection apparatus, it is possible to detect a defect while automatically discriminating the type of the defect.

Preferably, the defect detectable by the defect detection part further includes a non-periodic defect which is a scratch or a deposit on a surface of the object or a mixture mixed into the object. The defect detection part further includes a non-periodic defect discrimination part for detecting a non-periodic brightness variation in at least one brightness profile among the plurality of brightness profiles and determining the non-periodic brightness variation as a non-periodic defect.

Preferably, the inspection apparatus further includes a rotation mechanism for relatively rotating the object, the image pickup auxiliary member, and the image pickup part about respective rotation axes perpendicular to an optical axis of the lighting part relative to the optical axis of the lighting part while maintaining a distance between the object and the image pickup auxiliary member in an optical axis direction of the lighting part and a distance between the image pickup auxiliary member and the image pickup part in an optical axis direction of the image pickup part, to thereby change a measurement angle which is an angle formed by the optical axis of the lighting part and the normal direction of the object, and a control part for controlling the image pickup part and the rotation mechanism, to thereby cause the image pickup part to acquire the picked-up image for defect detection performed by the periodic defect discrimination part while determining the measurement angle as a predetermined first measurement angle, and to thereby cause the image pickup part to acquire the picked-up image for defect detection performed by the non-periodic defect discrimination part while determining the measurement angle as a predetermined second measurement angle different from the first measurement angle.

Preferably, the inspection apparatus further includes a moving mechanism for relatively moving the image pickup auxiliary member and the image pickup part relative to the object in an optical axis direction of the lighting part while maintaining a distance between the image pickup auxiliary member and the image pickup part in an optical axis direction of the image pickup part, to thereby change a projection distance which is a distance between the image pickup auxiliary member and the object in the optical axis direction of the lighting part, and a control part for controlling the image pickup part and the moving mechanism, to thereby cause the image pickup part to acquire a plurality of picked-up images having different projection distances, respectively. The non-periodic defect includes a first non-periodic defect which is a scratch or a deposit on a surface of the object and a second non-periodic defect which is a mixture mixed into the object. The profile acquisition part sets an inspection region extending linearly in parallel with the second direction at a predetermined inspection position in the first direction for each of the plurality of picked-up images and acquires a brightness profile representing a brightness change in the second direction in the inspection region. The defect detection part further includes an evaluation value calculation part for detecting a non-periodic brightness variation in the brightness profile of one picked-up image among the plurality of picked-up images and obtaining an evaluation value of the non-periodic brightness variation for each of the plurality of picked-up images. The non-periodic defect discrimination part determines that the non-periodic defect is the first non-periodic defect when an evaluation value variation index indicating a degree of variation of the evaluation value in the plurality of picked-up images with respect to the non-periodic brightness variation is not larger than a predetermined threshold value and determines that the non-periodic defect is the second non-periodic defect when the evaluation value variation index is larger than the threshold value.

Preferably, the inspection apparatus further includes a rotation mechanism for relatively rotating the object, the image pickup auxiliary member, and the image pickup part about respective rotation axes perpendicular to an optical axis of the lighting part relative to the optical axis of the lighting part while maintaining a distance between the object and the image pickup auxiliary member in an optical axis direction of the lighting part and a distance between the image pickup auxiliary member and the image pickup part in an optical axis direction of the image pickup part, to thereby change a measurement angle which is an angle formed by the optical axis of the lighting part and the normal direction of the object. The control part controls the image pickup part, the moving mechanism, and the rotation mechanism, to thereby acquire a plurality of picked-up images having different projection distances, respectively, at each of a plurality of measurement angles. The profile acquisition part acquires a plurality of brightness profiles from the plurality of picked-up images for each of the plurality of measurement angles. The evaluation value calculation part obtains a plurality of evaluation values of the non-periodic brightness variation from the plurality of picked-up images for each of the plurality of measurement angles. The evaluation value variation index is obtained on the basis of a variation of the plurality of evaluation values at each of the plurality of measurement angles.

Preferably, the non-periodic defect includes a first non-periodic defect which is a scratch or a deposit on a surface of the object and a second non-periodic defect which is a mixture mixed into the object. The non-periodic brightness variation includes a lower peak which is a downward peak and a first upper peak and a second upper peak which are upward peaks adjacent to both sides of the lower peak. An upward half amplitude and a downward half amplitude of brightness variation in the at least one brightness profile are assumed as a1 and a2, respectively, a brightness difference between the first upper peak and background brightness a0 is assumed as b, and a brightness difference between the second upper peak and the background brightness a0 is assumed as c. The non-periodic defect discrimination part determines that a non-periodic defect corresponding to the non-periodic brightness variation is the first non-periodic defect when b and c are each not larger than Max (a1, a2) indicating a larger one among a1 and a2 in the non-periodic brightness variation, and determines that a non-periodic defect corresponding to the non-periodic brightness variation is the second non-periodic defect when at least one of b and c is larger than Max (a1, a2).

The inspection apparatus according to one preferred embodiment of the present invention includes an object holding part for holding an object, an auxiliary member holding part for holding a sheet-like or plate-like image pickup auxiliary member to be parallel to the object, a lighting part for emitting observation light to the object, an image pickup part disposed on the opposite side to the object with the image pickup auxiliary member interposed therebetween, having an optical axis parallel to a normal direction of the object, for acquiring a picked-up image by picking up an image formed on the image pickup auxiliary member with the observation light transmitted through the object, a moving mechanism for relatively moving the image pickup auxiliary member and the image pickup part relative to the object in an optical axis direction of the lighting part while maintaining a distance between the image pickup auxiliary member and the image pickup part in an optical axis direction of the image pickup part, to thereby change a projection distance which is a distance between the image pickup auxiliary member and the object in the optical axis direction of the lighting part, a defect detection part for detecting a defect of the object on the basis of the picked-up image, and a control part for controlling the image pickup part and the moving mechanism, to thereby cause the image pickup part to acquire a plurality of picked-up images having different projection distances, respectively. A defect detectable by the defect detection part includes a first non-periodic defect which is a scratch or a deposit on a surface of the object and a second non-periodic defect which is a mixture mixed into the object. The defect detection part includes a profile acquisition part for setting an inspection region at a predetermined inspection position in a first direction, which extends linearly in parallel with a second direction perpendicular to the first direction, for each of the plurality of picked-up images and acquiring a brightness profile representing a brightness change in the second direction in the inspection region, an evaluation value calculation part for detecting a non-periodic brightness variation in the brightness profile of one picked-up image among the plurality of picked-up images and obtaining an evaluation value of the non-periodic brightness variation for each of the plurality of picked-up images, and the non-periodic defect discrimination part for determining that the non-periodic defect is the first non-periodic defect when an evaluation value variation index indicating a degree of variation of the evaluation value in the plurality of picked-up images with respect to the non-periodic brightness variation is not larger than a predetermined threshold value and determines that the non-periodic defect is the second non-periodic defect when the evaluation value variation index is larger than the threshold value. In the inspection apparatus, it is possible to detect a defect while automatically discriminating the type of the defect.

Preferably, the inspection apparatus further includes a rotation mechanism for relatively rotating the object, the image pickup auxiliary member, and the image pickup part about respective rotation axes perpendicular to an optical axis of the lighting part relative to the optical axis of the lighting part while maintaining a distance between the object and the image pickup auxiliary member in an optical axis direction of the lighting part and a distance between the image pickup auxiliary member and the image pickup part in an optical axis direction of the image pickup part, to thereby change a measurement angle which is an angle formed by the optical axis of the lighting part and the normal direction of the object. The control part controls the image pickup part, the moving mechanism, and the rotation mechanism, to thereby acquire a plurality of picked-up images having different projection distances, respectively, at each of a plurality of measurement angles. The profile acquisition part acquires a plurality of brightness profiles from the plurality of picked-up images for each of the plurality of measurement angles. The evaluation value calculation part obtains a plurality of evaluation values of the non-periodic brightness variation from the plurality of picked-up images for each of the plurality of measurement angles. The evaluation value variation index is obtained on the basis of a variation of the plurality of evaluation values at each of the plurality of measurement angles.

The inspection apparatus according to one preferred embodiment of the present invention includes an object holding part for holding an object, an auxiliary member holding part for holding a sheet-like or plate-like image pickup auxiliary member to be parallel to the object, a lighting part for emitting observation light to the object, an image pickup part disposed on the opposite side to the object with the image pickup auxiliary member interposed therebetween, having an optical axis parallel to a normal direction of the object, for acquiring a picked-up image by picking up an image formed on the image pickup auxiliary member with the observation light transmitted through the object, a rotation mechanism for relatively rotating the object, the image pickup auxiliary member, and the image pickup part about respective rotation axes perpendicular to an optical axis of the lighting part relative to the optical axis of the lighting part while maintaining a distance between the object and the image pickup auxiliary member in an optical axis direction of the lighting part and a distance between the image pickup auxiliary member and the image pickup part in an optical axis direction of the image pickup part, to thereby change a measurement angle which is an angle formed by the optical axis of the lighting part and the normal direction of the object, and a defect detection part for detecting a defect of the object on the basis of the picked-up image. In the inspection apparatus, it is possible to detect a defect while automatically discriminate the type of the defect.

Preferably, the inspection apparatus further includes a moving mechanism for relatively moving the image pickup auxiliary member and the image pickup part relative to the object in the optical axis direction of the lighting part while maintaining a distance between the image pickup auxiliary member and the image pickup part in the optical axis direction of the image pickup part, to thereby change a projection distance which is a distance between the image pickup auxiliary member and the object in the optical axis direction of the lighting part.

Preferably, the lighting part includes a light source part and a lens for converting light from the light source part into the observation light which is parallel light, to emit the observation light onto the object. A distance between the lens and the image pickup auxiliary member in an optical axis direction of the lighting part is not smaller than a half of focal length of the lens.

These and other objects, features, aspects and advantages of the present invention will become more apparent from the following detailed description of the present invention when taken in conjunction with the accompanying drawings.

### BRIEF DESCRIPTION OF DRAWINGS

FIG. 1 is an elevational view showing an inspection apparatus in accordance with one preferred embodiment;
FIG. 2 is a plan view showing an image acquisition apparatus;
FIG. 3 is a plan view showing the image acquisition apparatus;
FIG. 4 is a plan view showing the image acquisition apparatus;
FIG. 5 is a view showing a configuration of a computer;
FIG. 6 is a block diagram showing functions implemented by the computer;
FIG. 7 is a view showing a manufacturing apparatus;
FIG. 8 is a view showing an object;
FIG. 9 is a view showing an image of the object;
FIG. 10 is a view showing another image of the object;
FIG. 11 is a view showing still another image of the object;
FIG. 12 is a flowchart showing an operation flow for defect detection;
FIG. 13 is a view showing a picked-up image and an inspection region;
FIG. 14 is a view showing a brightness profile;
FIG. 15 is a view showing a brightness profile;
FIG. 16 is a flowchart showing an operation flow for defect detection;
FIG. 17 is a view showing a brightness profile;
FIG. 18 is a view showing an evaluation value;
FIG. 19A is a view showing a brightness profile;
FIG. 19B is a view showing a brightness profile; and
FIG. 20 is an elevational view showing another inspection apparatus.

### DESCRIPTION OF EMBODIMENTS

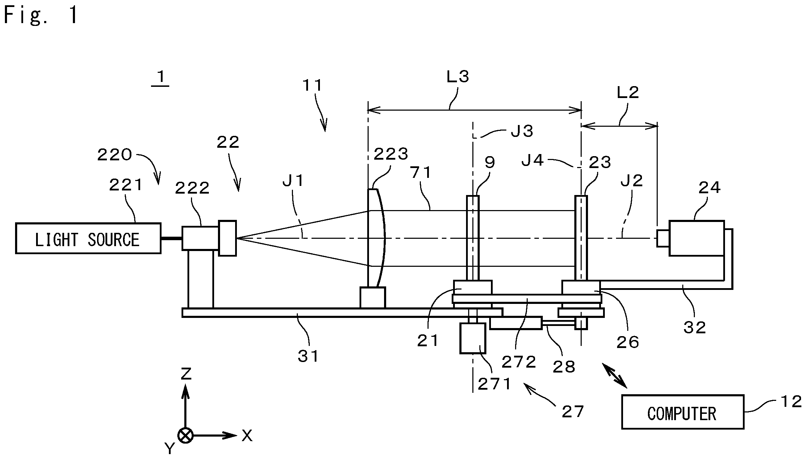

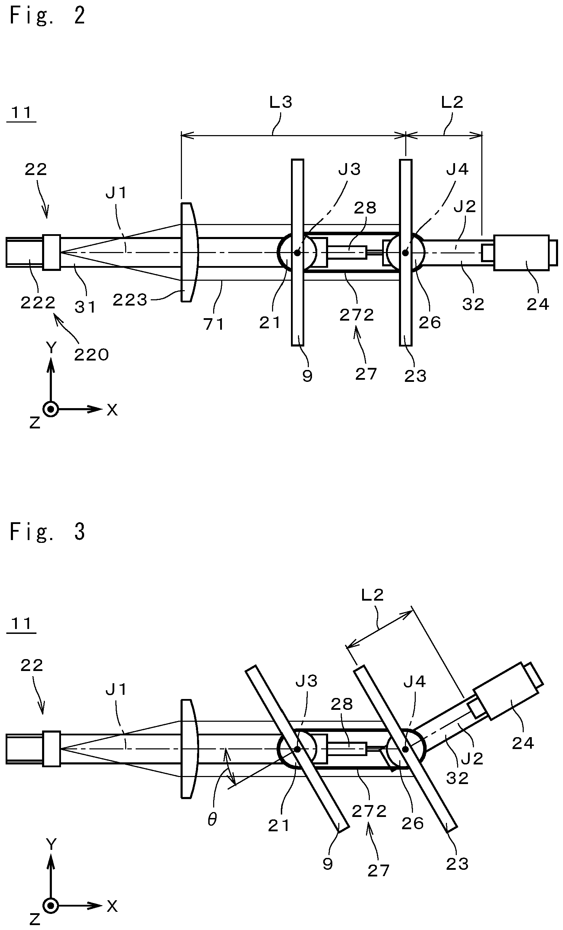

FIG. 1 is an elevational view showing an inspection apparatus 1 in accordance with one preferred embodiment of the present invention. The inspection apparatus 1 includes an image acquisition apparatus 11 and a computer 12. FIG. 2 is a plan view showing the image acquisition apparatus 11. FIGs. 1 and 2 each show an X direction, a Y direction, and a Z direction, for convenience of description. The X direction, the Y direction, and the Z direction are perpendicular to one another. Though the X direction and the Y direction are horizontal directions and the Z direction is vertical direction in the exemplary case shown in FIGs. 1 and 2, the direction relation is not limited to this exemplary case.

An object 9 to be inspected is a sheet-like or plate-like member having translucency, which is manufactured while being continuously transferred in a predetermined transfer direction. The object 9 is formed of, for example, a thermoplastic resin. The object 9 can be used as, for example, an optical film of a surface substrate of a liquid crystal display, a 5G compatible component of a smartphone, or the like or an alternative of a window glass of an automobile. A material and a purpose of use of the object 9 may be changed in various manners. Though the object 9 is a substantially transparent member in the present preferred embodiment, the object 9 may be a translucent member only if the object 9 has translucency. The object 9 has, for example, a substantially rectangular shape as viewed from a direction perpendicular to a main surface. Both main surfaces of the object 9 are substantial planes substantially parallel to each other. A main surface of the object 9 refers to the largest surface among surfaces that the object 9 has.

As shown in FIGs. 1 and 2, the image acquisition apparatus 11 includes an object holding part 21, a lighting part 22, an image pickup auxiliary member 23, an image pickup part 24, an auxiliary member holding part 26, a rotation mechanism 27, and a moving mechanism 28.

The object holding part 21 holds the object 9. In the exemplary case shown in FIGs. 1 and 2, the object holding part 21 is a substantially cylindrical member extending substantially in parallel with the Z direction. The object 9 is held from below by the object holding part 21 so that the main surface of the object 9 should be perpendicular to an XY plane. In other words, a normal direction of the object 9 (i.e., a direction perpendicular to the main surface of the object 9) is parallel to the XY plane. The XY plane refers to one predetermined virtual plane in parallel with the X direction and the Y direction. In the object 9 held by the object holding part 21, a direction corresponding to the transfer direction in manufacturing the object 9 described later is parallel to the XY plane.

The lighting part 22 includes a light source 221, a light emission part 222, and a lens 223. In FIG. 2, the light source 221 is not shown. In the exemplary case shown in FIG. 1, an optical axis J1 of the lighting part 22 is parallel to the X direction (i.e., perpendicular to a YZ plane). In the exemplary case shown in FIG. 1, the optical axis J1 of the lighting part 22 passes through a substantial center of the main surface of the object 9. The light source 221 is, for example, an LED. As the light source 221, a lighting element other than the LED may be used. Light generated by the light source 221 is guided to the light emission part 222 through an optical fiber. The light emission part 222 emits light from a pinhole. In other words, the light emission part 222 is a point light source. The light source 221 and the light emission part 222 may be one unit. In the following description, the light source 221 and the light emission part 222 are also collectively referred to as a "light source part 220". The light outgoing from the light emission part 222 is converted into parallel light by the lens 223 and emitted onto the object 9. In the following description, the light emitted onto the object 9 from the lighting part 22 is also referred to as "observation light 71". In the exemplary case shown in FIG. 1, the light emission part 222, the lens 223, and the object holding part 21 are attached to one frame 31 and relatively fixed. Further, the lens 223 is a plano-convex lens with one lens surface being a flat surface and the other lens surface being a convex surface. The lens 223 is disposed on the optical axis J1 with the flat lens surface facing the light source part 220 and the convex lens surface facing the object 9, Further, the shape, the arrangement, and the like of the lens 223 may be changed in various manners.

The image pickup auxiliary member 23 is a sheet-like or plate-like member having translucency. The image pickup auxiliary member 23 is, for example, a diffusion film. As the image pickup auxiliary member 23, a film other than the diffusion film may be used. The image pickup auxiliary member 23, for example, as viewed from a direction perpendicular to a main surface thereof has a substantially rectangular shape with substantially the same size as that of the object 9. The image pickup auxiliary member 23 may be larger than the object 9 or smaller than the object 9. Further, the shape of the image pickup auxiliary member 23 may be changed in various manners. Both the main surfaces of the image pickup auxiliary member 23 are substantial planes, respectively, which are substantially parallel to each other. The main surface of the image pickup auxiliary member 23 refers to the largest surface among surfaces that the image pickup auxiliary member 23 has.

The auxiliary member holding part 26 holds the image pickup auxiliary member 23. In the exemplary case shown in FIGs. 1 and 2, the auxiliary member holding part 26 is a substantially cylindrical member extending substantially in parallel with the Z direction. The image pickup auxiliary member 23 is held from below by the auxiliary member holding part 26 so that the main surface of the image pickup auxiliary member 23 should be perpendicular to the XY plane. The auxiliary member holding part 26 holds the image pickup auxiliary member 23 to be parallel to the object 9. In other words, the image pickup auxiliary member 23 is held by the auxiliary member holding part 26 so that the main surface of the image pickup auxiliary member 23 should be parallel to the main surface of the object 9. In the exemplary case shown in FIGs. 1 and 2, the image pickup auxiliary member 23 is disposed substantially at the same position as that of the object 9 in the Z direction and overlaps substantially the whole of the object 9 when viewed along the normal direction of the object 9.

The image pickup part 24 is disposed on the opposite side of the object 9 with the image pickup auxiliary member 23 interposed therebetween. In the exemplary case shown in FIG. 1, the object 9, the image pickup auxiliary member 23, and the image pickup part 24 are aligned in this order from a (-X) side toward a (+X) direction. Further, the lighting part 22 is disposed on the (-X) side of the object 9. An optical axis J2 of the image pickup part 24 is parallel to the XY plane and parallel to the normal direction of the object 9. In the exemplary case shown in FIG. 1, the optical axis J2 of the image pickup part 24 passes through a substantial center of the main surface of the image pickup auxiliary member 23 and the substantial center of the main surface of the object 9. The image pickup part 24 is, for example, an industrial digital camera including a CMOS or a CCD. The image pickup part 24 is, for example, an area camera capable of acquiring a two-dimensional image. The image pickup part 24 may be any other type of camera.

In the image acquisition apparatus 11, the lighting part 22 emits the observation light 71 toward the object 9 from the (-X) side. The observation light 71 transmitted through the object 9 is guided to the image pickup auxiliary member 23 and projected onto the image pickup auxiliary member 23. The image pickup part 24 picks up an image formed on the image pickup auxiliary member 23 from the (+X) side of the image pickup auxiliary member 23, to thereby acquire a picked-up image. In other words, the image pickup part 24 acquires a transmission image of the object 9, which is transmitted through the image pickup auxiliary member 23, as the picked-up image. Exactly expressing, the image pickup part 24 acquires data representing the image of the object 9 projected on the image pickup auxiliary member 23.

In the exemplary case shown in FIG. 1, the image pickup part 24 and the auxiliary member holding part 26 are attached to one frame 32, and a relative position of the image pickup part 24 relative to the auxiliary member holding part 26 and the image pickup auxiliary member 23 is fixed. Therefore, a distance L2 between the image pickup auxiliary member 23 and the image pickup part 24 in a direction in which the optical axis J2 of the image pickup part 24 extends (hereinafter, referred to as an "optical axis direction of the image pickup part 24") is maintained constant.

The rotation mechanism 27 rotates the object 9 together with the object holding part 21 about a rotation axis J3 extending in the Z direction. Further, the object holding part 21 is rotated above the frame 31 and the frame 31 does not rotate. FIG. 3 is a plan view showing a state where the object 9 is rotated only by a predetermined angle by the rotation mechanism 27. In the exemplary case shown in FIG. 3, the object 9 is rotated counterclockwise by about 30° from the state shown in FIG. 2. The rotation axis J3 passes through a substantial center of the object holding part 21 in a plan view. The rotation axis J3 passes through a substantial center of the main surface of the object 9 when viewed along the normal direction of the object 9. Furthermore, the rotation axis J3 perpendicularly intersects the optical axis J1 of the lighting part 22 above the object 9. In the following description, an angle θ formed by the optical axis J1 of the lighting part 22 and the normal direction of the object 9 is also referred to as a "measurement angle θ". The rotation mechanism 27 is a mechanism for changing the measurement angle θ.

The rotation mechanism 27 rotates the frame 32 about a rotation axis J4 extending in the Z direction, to thereby integrally rotate the image pickup auxiliary member 23, the auxiliary member holding part 26, and the image pickup part 24. The rotation axis J4 passes through a substantial center of the auxiliary member holding part 26 in a plan view. The rotation axis J3 and the rotation axis J4 are parallel to each other. The rotation axis J4 passes through a substantial center of the main surface of image pickup auxiliary member 23 when viewed along a normal direction of the image pickup auxiliary member 23. Further, the rotation axis J4 perpendicularly intersects the optical axis J1 of the lighting part 22 and the optical axis J2 of the image pickup part 24 above the image pickup auxiliary member 23.

In the image acquisition apparatus 11, respective rotation directions and rotation angles of the object 9 and the image pickup auxiliary member 23 rotated by the rotation mechanism 27 are the same. Therefore, the object 9 and the image pickup auxiliary member 23 are parallel to each other regardless of the size of the above-described measurement angle θ. Further, an angle formed by the normal direction of the image pickup auxiliary member 23 and the optical axis J1 of the lighting part 22 is equal to the measurement angle θ in a plan view (i.e., as viewed along the rotation axis J4).

As described above, the image pickup part 24 is fixed relative to the auxiliary member holding part 26. Therefore, when the image pickup auxiliary member 23 and the auxiliary member holding part 26 are rotated by the rotation mechanism 27, the image pickup part 24 is also rotated together therewith. The optical axis J2 of the image pickup part 24 intersects the optical axis J1 of the lighting part 22 above the rotation axis J4 regardless of the size of the measurement angle θ. An angle formed by the optical axis J2 of the image pickup part 24 and the optical axis J1 of the lighting part 22 is equal to the measurement angle θ in a plan view (i.e., as viewed along the rotation axis J4). Further, the distance L2 between the image pickup auxiliary member 23 and the image pickup part 24 in the optical axis direction of the image pickup part 24 is constant regardless of the size of the measurement angle θ.

In the exemplary case shown in FIG. 1, the rotation mechanism 27 includes a motor 271 and a belt 272. The motor 271 is a rotary motor attached to a lower portion of the object holding part 21. The belt 272 is an annular member in contact with side surfaces of the object holding part 21 and the auxiliary member holding part 26. When the motor 271 rotates, the object holding part 21 connected to the motor 271 is rotated. Further, the belt 272 is also rotated by a frictional force exerted between the object holding part 21 and the belt 272, the rotation of the object holding part 21 is transferred to the auxiliary member holding part 26, and the auxiliary member holding part 26 is also rotated at the same angle as that of the object holding part 21.

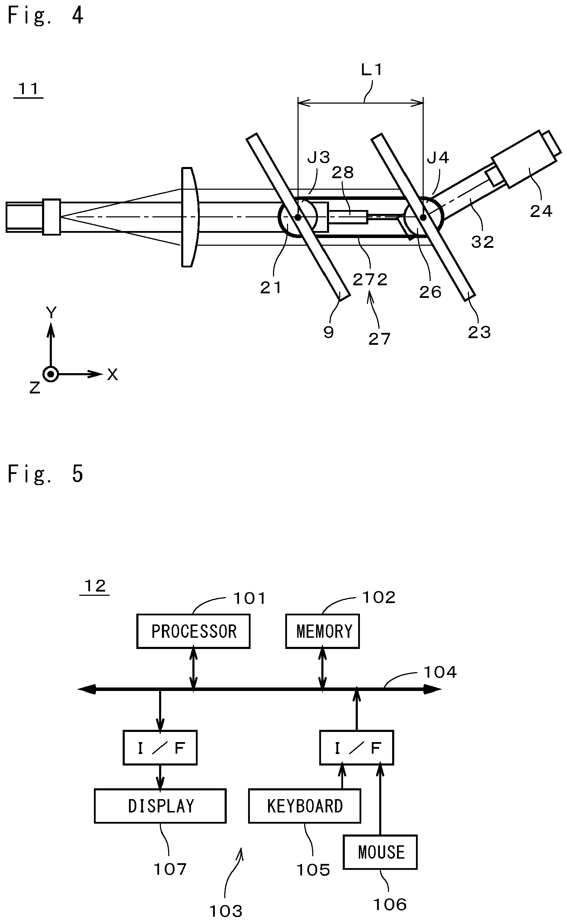

The moving mechanism 28 moves the image pickup auxiliary member 23 and the image pickup part 24 in the X direction (i.e., in the optical axis direction of the lighting part 22). FIG. 4 is a plan view showing a state where the image pickup auxiliary member 23 and the image pickup part 24 are moved by the moving mechanism 28 from the position shown in FIG. 3 in the (+X) direction. In the exemplary case shown in FIG. 4, the moving mechanism 28 moves the auxiliary member holding part 26 in the X direction to thereby integrally move the image pickup auxiliary member 23, the auxiliary member holding part 26, and the image pickup part 24 fixed to the auxiliary member holding part 26 with the frame 32 interposed therebetween. The distance L1 (hereinafter, also referred to as a "projection distance L1") between the object 9 and the image pickup auxiliary member 23 in the X direction is thereby changed. The projection distance L1 is a distance between the rotation axis J3 and the rotation axis J4 in the X direction. The moving mechanism 28 includes, for example, a linear motor or an air cylinder.

As described above, in the image acquisition apparatus 11, since the moving mechanism 28 integrally moves the auxiliary member holding part 26 and the image pickup part 24, this move is performed in a state where the distance L2 (see FIG. 3) between the image pickup auxiliary member 23 and the image pickup part 24 in the optical axis direction of the image pickup part 24 is maintained constant. When the moving mechanism 28 moves the auxiliary member holding part 26 in the X direction, for example, the belt 272 of the rotation mechanism 27 expands and contracts, to thereby maintain a state where the image pickup auxiliary member 23 and the auxiliary member holding part 26 are rotated in synchronization with the rotation of the object 9 and the object holding part 21 at the same angle as that of the rotation. Further, the rotation of the object 9, the image pickup auxiliary member 23, and the image pickup part 24 by the rotation mechanism 27 is performed in a state where the distance (i.e., the projection distance L1) between the object 9 and the image pickup auxiliary member 23 in the X direction and the distance L2 between the image pickup auxiliary member 23 and the image pickup part 24 in the optical axis direction of the image pickup part 24 are maintained constant. Furthermore, the respective configurations of the rotation mechanism 27 and the moving mechanism 28 are not limited to the above-described examples but may be changed in various manners.

In the image acquisition apparatus 11, assuming that the distance between the lens 223 and the image pickup auxiliary member 23 in the X direction (i.e., in the optical axis direction of the lighting part 22) is represented as "L3" (see FIGs. 1 and 2), it is preferable that the distance L3 should be not smaller than a half of focal length of the lens 223. It is thereby possible to suppress a secondary real image of the light source 221 from being projected on the image pickup auxiliary member 23 by the lens 223 and suppress the secondary real image being included in the picked-up image acquired by the image pickup part 24. The secondary real image is formed on the (+X) side relative to the lens 223 when the observation light 71 emitted from the lighting part 22 is reflected by the object 9 and enters the lens 223 again and then is reflected by the lens surface of the lens 223 on the side of the light source part 220. In the present preferred embodiment, since the light reflected by the object 9 and entering the lens 223 again is substantial parallel light, the secondary real image is formed at a position at a substantial half of the focal length of the lens 223 on the (+X) side relative to the lens 223. Further, the above-described distance L3 is, in detail, a distance between a point as a reference of the focal length of the lens 223 on the optical axis J1 and the position (the rotation axis J4 in the above-described exemplary case) of the image pickup auxiliary member 23 on the optical axis J1.

FIG. 5 is a view showing a configuration of the computer 12. The computer 12 is an ordinary computer system including a processor 101, a memory 102, an input/output part 103, and a bus 104. The bus 104 is a signal circuit for connecting the processor 101, the memory 102, and the input/output part 103 to one another. The memory 102 stores therein a program and various information. The processor 101 performs various processings (for example, numerical calculation or image processing) while using the memory 102 and the like in accordance with the program and the like stored in the memory 102. The input/output part 103 includes a keyboard 105 and a mouse 106 for receiving an input from an operator and a display 107 for displaying thereon an output from the processor 101, or the like.

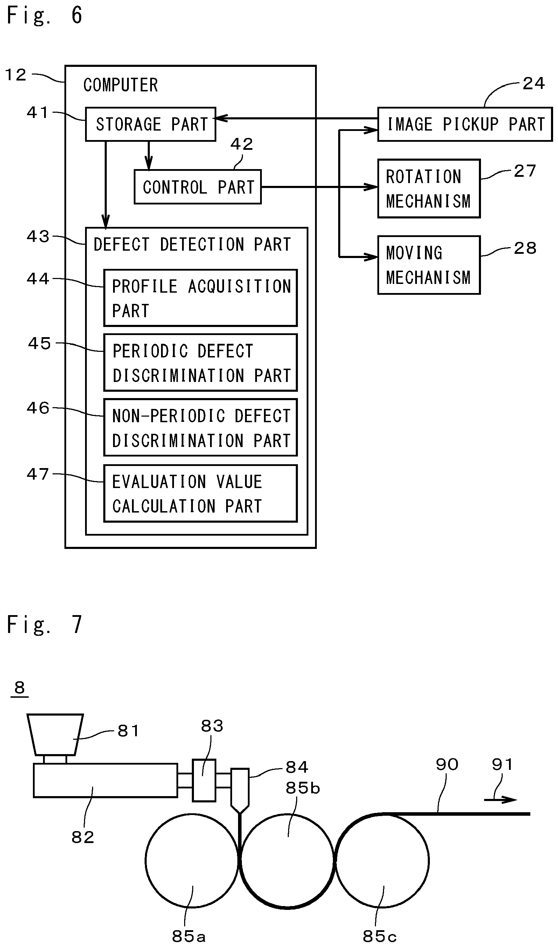

FIG. 6 is a block diagram showing functions implemented by the computer 12. In the exemplary case shown in FIG. 6, a storage part 41, a control part 42, and a defect detection part 43 are implemented by the computer 12. The defect detection part 43 includes a profile acquisition part 44, a periodic defect discrimination part 45, a non-periodic defect discrimination part 46, and an evaluation value calculation part 47. The storage part 41 is implemented mainly by the memory 102 and stores therein the picked-up image or the like acquired by the image pickup part 24. The control part 42 is implemented mainly by the processor 101 and controls the image pickup part 24, the rotation mechanism 27, and the moving mechanism 28. The control part 42 controls the image pickup part 24, the rotation mechanism 27 and/or the moving mechanism 28, to thereby acquire a plurality of picked-up images having different measurement angles θ and/or different projection distances L1, respectively. The defect detection part 43 is implemented mainly by the processor 101 and detects a defect of the object 9 on the basis of the picked-up image acquired by the image pickup part 24, as described later.

FIG. 7 is a view showing a manufacturing apparatus 8 for manufacturing the object 9. The manufacturing apparatus 8 is a so-called extrusion molding apparatus. The manufacturing apparatus 8 includes a hopper 81, an extruder 82, a gear pump 83, a die 84, and forming rolls 85a to 85c. The outer diameter of each of the forming rolls 85a to 85c is, for example, 200 mm to 500 mm.

In the manufacturing apparatus 8, resin pellets or resin powder (i.e., a material of the object 9) supplied from the hopper 81 are melted inside the extruder 82, and the molten resin is sent out to the die 84 by the gear pump 83. Then, the molten resin is dropped in a film form from a lower end of the die 84 to between the forming roll 85a and the forming roll 85b which are rotating, to be supplied therebetween. The molten resin supplied from the die 84 is cooled while being pinched and compressed between the forming roll 85a and the forming roll 85b and wound around a surface of the forming roll 85b while being molded into a sheet member 90 (i.e., the continuous object 9) having a predetermined thickness. The sheet member 90 is drawn, passing through between the forming roll 85b and the forming roll 85c. In the manufacturing apparatus 8, a direction along a region of outer surfaces of the forming rolls 85b and 85c, which is in contact with the sheet member 90, in which the sheet member 90 separated from the forming roll 85c is transferred is a transfer direction of the sheet member 90 (i.e., a transfer direction of the above-described object 9) . In FIG. 7, the transfer direction is represented by an arrow with the reference sign 91. The above-described object 9 is a cutout of part of the sheet member 90.

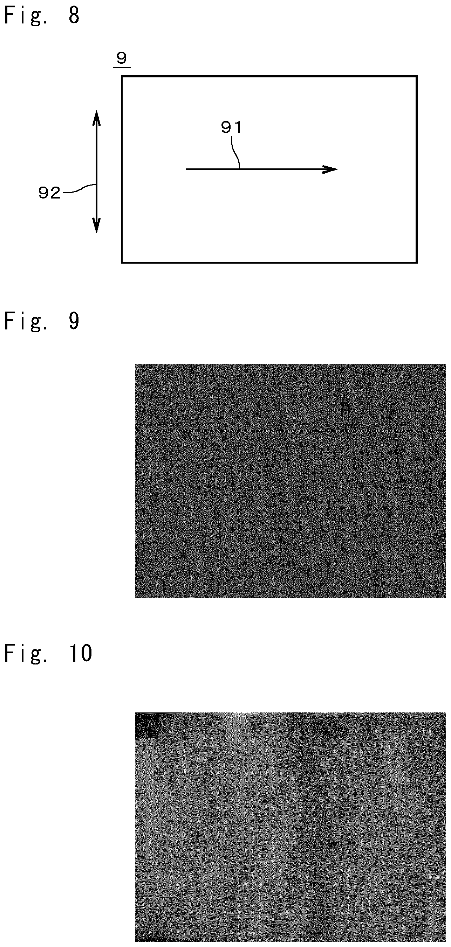

FIG. 8 is a view showing the object 9. In FIG. 8, a reference sign 91 is given to an arrow representing a direction corresponding to the transfer direction 91 in FIG. 7. In the following description, a direction above the object 9, corresponding to the transfer direction 91, is also referred to as a "transfer direction 91". Further, a direction parallel to the main surface of the object 9 and perpendicular to the transfer direction 91 is also referred to as a "width direction 92". In FIGs. 1 and 2, the width direction 92 is perpendicular to the XY plane.

The defect of the object 9 mainly occurs in a manufacturing process by the manufacturing apparatus 8. The defect of the object 9 is classifiable into a periodic defect which is a defect periodically appearing in the above-described transfer direction 91 and a non-periodic defect not having periodicity.

The periodic defect includes a first periodic defect including a plurality of streaks which are periodically arranged in the transfer direction 91 on the object 9. FIG. 9 shows an image obtained by imaging the plurality of streaks on the object 9 by the image pickup part 24. The plurality of streaks extend substantially linearly in a direction along the width direction 92 on the object 9. It can be also regarded that each streak has a substantially strip-like shape with the length in the width direction 92 is larger than the width in the transfer direction 91. Each streak continuously extends substantially without interruption along the width direction 92. In the exemplary case shown in FIG. 9, each streak runs longitudinally across the image along the width direction 92. The cycle of the plurality of streaks (i.e., a distance between adjacent two streaks in the transfer direction 91) is smaller than the perimeter of the outer surface of the forming roll 85b. The cycle is, for example, 0.1 % to 5 % of the perimeter of the outer surface of the forming roll 85b. The plurality of streaks occur, for example, due to deviation of the difference in the rotation speed of the forming rolls 85a to 85c or the like from an appropriate range.

The plurality of streaks may extend in parallel with the width direction 92 or may extend in a direction inclined with respect to the width direction to some degree. An angle formed by the direction in which the plurality of streaks extend and the width direction 92 is, for example, 0 ° to 10°, The plurality of streaks may extend exactly linearly or may extend substantially linearly, being curved to a certain degree. The plurality of streaks may appear exactly at the same cycle in the transfer direction 91 or may appear substantially at the same cycle with some deviation. Assuming that the transfer direction 91 and the width direction 92 describe above are referred to as a "first direction" and a "second direction", respectively, the plurality of streaks extend on the object 9 substantially linearly along the first direction and arranged periodically in the second direction perpendicular to the first direction.

The above-described periodic defect further includes a non-streaky second periodic defect different from the plurality of streaks which are the first periodic defects. The second periodic defects are periodically arranged on the object 9 in the transfer direction 91, substantially like the first periodic defects. The cycle of the second periodic defect in the transfer direction 91 generally tends to be larger than that of the first periodic defect in the transfer direction 91, but may be smaller than that of the first periodic defect or may be substantially the same as that. The cycle of the second periodic defect in the transfer direction 91 is, for example, 0.5 % to 100 % of the perimeter of the outer surface of the forming roll 85b. The above-described "non-streaky shape" refers to a shape not extending long (for example, not enough long to run longitudinally across the image) along the width direction 92, which is substantially a not-linear shape. Each defect included in the second periodic defect has, for example, a substantially elliptical shape or a substantially rectangular shape. The second periodic defect includes, for example, a defect (hereinafter, referred to as a "transfer defect") which occurs when an uneven shape (for example, a scratch or an extraneous matter) unintentionally existing on the outer surface of the forming roll 85b is transferred onto a main surface of the sheet member 90. In a case where one uneven shape exists on the outer surface of the forming roll 85b, for example, the cycle of the transfer defect is substantially the same as the perimeter of the outer surface of the forming roll 85b.

Further, the second periodic defect includes a defect (hereinafter, referred to as a "peeling mark") which occurs when the sheet member 90 is not appropriately peeled on part of the outer surface of the forming roll 85b or the like during peeling off the sheet member 90 from the outer surface of the forming roll 85b or the like. The second periodic defect also includes a defect which occurs due to poor cooling of the sheet member 90. The defect occurring due to poor cooling includes so-called "uneven cooling" and "uneven thickness". The uneven cooling is poor appearance which can occur due to a difference in the cooling speed between the vicinity of a surface of the sheet member 90 and the inside thereof during cooling of the relatively thick sheet member 90. Specifically, in a state where the vicinity of the surface of the sheet member 90 is cooled to be solidified, in a case where the inside of the sheet member 90 is in a melting state, not being solidified yet, the uneven cooling sometimes occurs due to the difference in the state. Further, the uneven thickness is a defect which occurs when the vicinity of the surface of the sheet member 90 which is once solidified is melted again due to the heat inside the sheet member 90 which is in the melting state, to thereby make the thickness of the sheet member 90 uneven. FIG. 10 shows an image obtained by imaging the uneven cooling on the object 9 by the image pickup part 24.

The second periodic defect also includes a defect (hereinafter, referred to as a "falling deviation defect") which occurs in a case where the molten resin is supplied at a position deviated from a desired falling position and inappropriately pinched and compressed, due to disturbance such as wind or the like, residence of the molten resin on the forming rolls 85a and 85b, or the like, when the molten resin falls to between the forming roll 85a and the forming roll 85b from the die 84. The second periodic defect also includes a defect (hereinafter, referred to as a "pump mark") which occurs due to periodic pulsation of the molten resin, which is caused by gear meshing of the gear pump 83, and a periodic variation of the thickness (hereinafter, referred to as a "flow mark") of the sheet member 90 due to a difference in the viscosity of the molten resin, which is caused during kneading by a screw inside the extruder 82.

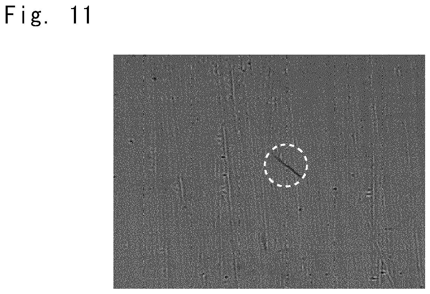

The above-described non-periodic defect includes a first non-periodic defect which is a scratch formed on the surface of the object 9 or an extraneous matter (i.e., a deposit) deposited on the surface and a second non-periodic defect which is an extraneous matter (i.e., a mixture) mixed into the object 9. Further, the entire mixture may exist inside the object 9 or part of the mixture may be exposed from the surface of the object 9. FIG. 11 shows an image obtained by imaging a scratch on the surface of the object 9 (i.e., the first non-periodic defect) by the image pickup part 24. In FIG. 11, the scratch is surrounded by a broken-line circle. The first non-periodic defect occurs when the surface of the sheet member 90 comes into contact with something, an extraneous matter in the air is deposited onto the surface, or the like after the sheet member 90 is formed in the manufacturing apparatus 8, during the transfer or the like of the sheet member 90 formed in the manufacturing apparatus 8, or the like. The second non-periodic defect occurs when an extraneous matter in the air or the like is mixed into the molten resin, or the like during the manufacture of the sheet member 90 in the manufacturing apparatus 8.

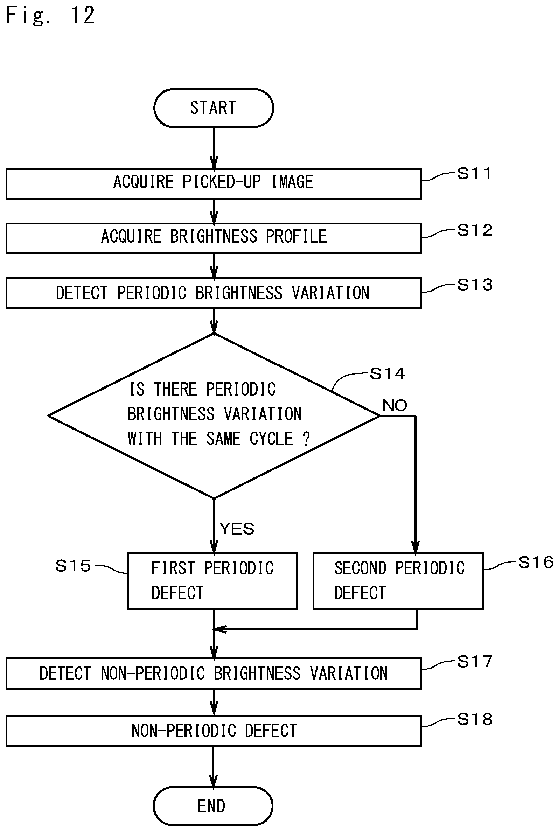

Next, an operation flow for defect detection of the object 9 by the inspection apparatus 1 will be described. FIG. 12 is a flowchart showing an exemplary operation flow for defect detection in a case of detecting the first periodic defect, the second periodic defect, and the non-periodic defect of the object 9.

In the inspection apparatus 1 shown in FIG. 1, first, by controlling the rotation mechanism 27 and the moving mechanism 28 by the control part 42 (see FIG. 6), the image pickup auxiliary member 23, the auxiliary member holding part 26, and the image pickup part 24 are rotated and moved so that a predetermined measurement angle θ and a predetermined projection distance L1 can be obtained. Then, the lighting part 22 emits the observation light 71 onto the object 9 and the image pickup part 24 acquires a picked-up image (Step S11). The picked-up image is transferred from the image pickup part 24 to the computer 12 and stored into the storage part 41 (see FIG. 6).

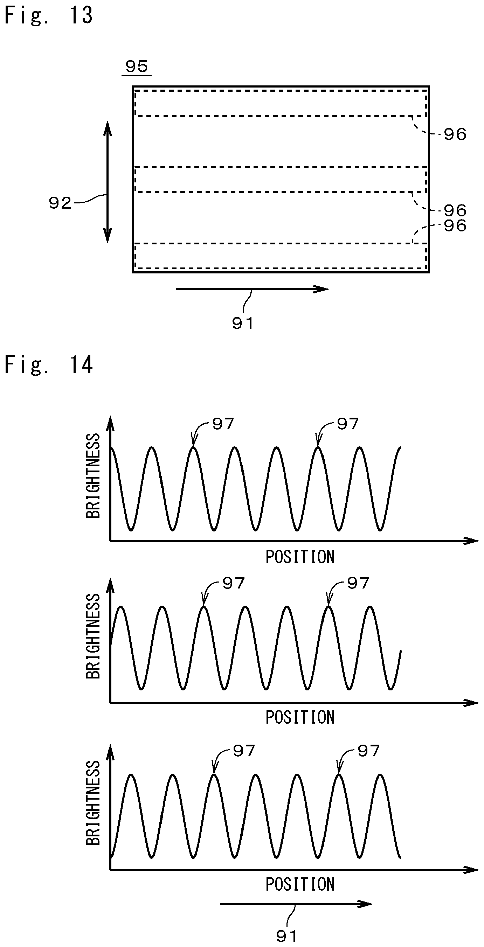

Subsequently, as shown in FIG. 13, in the picked-up image 95, a plurality of inspection regions are set at a plurality of inspection positions, respectively, in a direction (hereinafter, also referred to simply as a "width direction 92") corresponding to the width direction 92 of the object 9 by the profile acquisition part 44 (see FIG. 6). In FIG. 13, an outline of the picked-up image 95 and the inspection regions 96 are shown but defects or the like included in the picked-up image 95 are not shown. Each inspection region 96 is a rectangular belt-like region in the picked-up image 95, which linearly extends in a direction (hereinafter, also referred to simply as a "transfer direction 91") corresponding to the transfer direction 91 of the object 9. Each inspection region 96 is preferably provided across the entire length in the transfer direction 91 of the picked-up image 95. The width of each inspection region 96 in the width direction 92 is smaller than the length thereof in the transfer direction 91 and for example, 0.003 % to 0.1 % of the width of the picked-up image 95 in the width direction 92. The plurality of inspection regions 96 are arranged separately from one another in the width direction 92. In the exemplary case shown in FIG. 13, three inspection regions 96 are arranged at both end portions and the center of the picked-up image 95 in the width direction 92. The three inspection regions 96 are preferably arranged at substantially regular intervals in the width direction 92. Further, the number of inspection regions 96 may be changed in various manners within a range not less than 2. Furthermore, the width of each inspection region 96 in the width direction 92 may be smaller than 0.003 % of the width of the picked-up image 95 in the width direction 92 or may be larger than 0.1 % thereof. The plurality of inspection regions 96 do not necessarily need to be arranged separately from one another and may be continuously arranged in the width direction 92.

Next, the profile acquisition part 44 acquires the brightness profile for each of the plurality of inspection regions 96 (Step S12). The brightness profile represents a brightness change in the transfer direction 91 at each inspection region 96. FIG. 14 is a view schematically showing the vertically-arranged brightness profiles of the three inspection regions 96 on the picked-up image 95 in which a plurality of streaks exist as shown in the image of FIG. 9. In FIG. 14, the horizontal axis represents a position in the transfer direction 91 and the vertical axis represents the brightness. FIG. 14 shows part of the brightness profile of each inspection region 96. The same applies to similar figures described later.

In the defect detection part 43, the periodic defect discrimination part 45 (see FIG. 6) detects a periodic brightness variation from the brightness profile of each inspection region 96 (Step S13). The periodic brightness variation represents a state where a peak 97 of the brightness periodically appears in the transfer direction 91, as shown in FIG. 14. The periodic brightness variation is detected by performing a frequency analysis such as Fourier transform or the like on the brightness profile. The detection of the periodic brightness variation may be performed by any other method. Further, in Step S 13, in a case where there is no relatively large brightness variation (for example, there is no peak far away from an average brightness of the brightness profile by a predetermined good-product threshold value or more) in the brightness profile of each inspection region 96, it is determined that the object 9 is a good (non-defective) product.

In Step S13, when the periodic brightness variation is detected, the cycle of the periodic brightness variation in each inspection region 96 (i.e., a distance between the adjacent peaks 97 on the maximum value side or the minimum value side) is obtained. The calculation of the cycle is also performed by the above-described frequency analysis or any other method. As shown in FIG. 14, in a case where the periodic brightness variation with the same cycle exists common to the plurality of brightness profiles, the periodic defect discrimination part 45 determines that the first periodic defect (i.e., a plurality of streaks) exists in the object 9 (Steps S14 and S15). The above-described state where the periodic brightness variation has the same cycle refers that the cycles of the periodic brightness variations detected from the plurality of brightness profiles have errors included within a range not higher than 15 %.

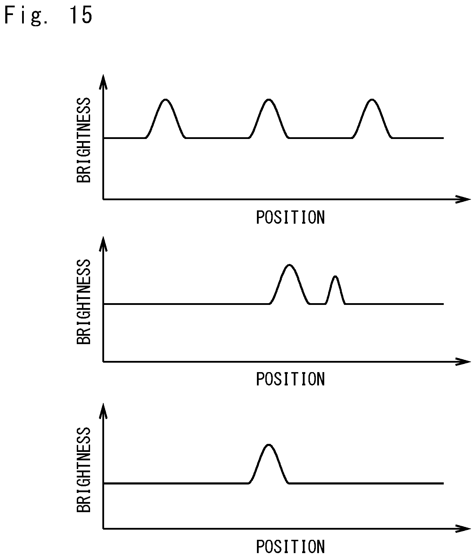

On the other hand, as shown in FIG. 15, in a case where among the brightness profiles of the plurality of inspection regions 96, the periodic brightness variation with the same cycle as that of the periodic brightness variation existing in one brightness profile does not exist in any other brightness profile (in other words, in a case where the plurality of brightness profiles do not have the periodic brightness variations with the same cycle in common), the periodic defect discrimination part 45 determines that the second periodic defect exists in the object 9 (Steps S14 and S16).

Further, in the defect detection part 43, in a case where the cycle of the periodic brightness variation which is obtained in Step S13 is relatively large (for example, larger than 5 % of the perimeter of the outer surface of the forming roll 85b), the periodic defect discrimination part 45 may determine that the second periodic defect, not the first periodic defect, exists regardless of the result of Step S14.

After the detection of the periodic defect is finished, the detection of the non-periodic defect is performed by the defect detection part 43. Specifically, in each brightness profile of the above-described picked-up image 95, the non-periodic defect discrimination part 46 (see FIG. 6) detects a brightness variation among relatively large brightness variations (for example, having a peak far away from the average brightness of the brightness profile by a predetermined threshold value or more) except the above-described periodic brightness variation, as the non-periodic brightness variation (Step S17). Then, the non-periodic defect discrimination part 46 determines that the non-periodic brightness variation is the non-periodic defect (Step S18). Further, in Steps S17 to S 18, all the brightness profiles of the plurality of inspection regions 96 in the picked-up image 95 do not necessarily need to be used, but at least one of the plurality of brightness profiles is used and the non-periodic defect may be detected from the one brightness profile. Alternatively, there may be a case where an inspection region 96 different from the above-described plurality of inspection regions 96 is set in the picked-up image 95 and the non-periodic defect is detected by using the brightness profile of the different inspection region 96.

Though the picked-up image 95 used for the detection of the periodic defect in Steps S13 to S 16 is the same as the picked-up image 95 used for the detection of the non-periodic defect in Steps S17 to S 18 in the above description, these picked-up images 95 may be different from each other.

There may be a case, for example, where in Step S11, the picked-up image 95 for the detection of the periodic defect and the picked-up image 95 for the detection of the non-periodic defect are separately acquired and in Step S12, the respective brightness profiles of the inspection regions 96 in each picked-up image 95 are acquired. Preferably, by controlling the image pickup part 24 and the rotation mechanism 27 by the control part 42, the picked-up image 95 for the detection of the periodic defect is acquired in a state where the measurement angle θ is a predetermined first measurement angle, and the picked-up image 95 for the detection of the non-periodic defect is acquired in a state where the measurement angle θ is a predetermined second measurement angle. The second measurement angle is an angle different from the first measurement angle. Preferably, the first measurement angle is larger than the second measurement angle. When the first measurement angle is set larger, since a shading difference between the plurality of streaks and regions other than the streaks in the picked-up image 95 becomes large, it is possible to detect a plurality of streaks with high accuracy. For example, the first measurement angle ranges from 30° to 80° and the second measurement angle ranges from 0° to 60°.

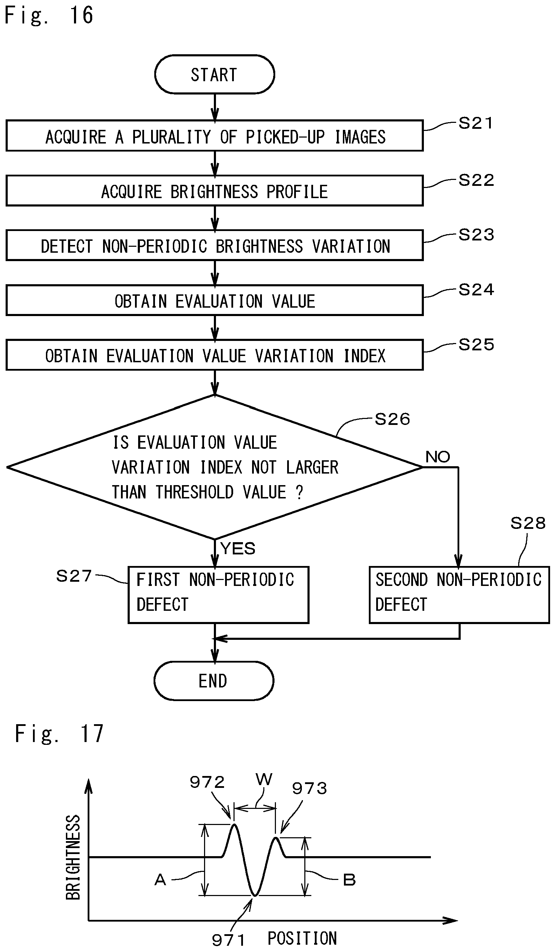

FIG. 16 is a flowchart showing an exemplary operation flow for defect detection in which the first non-periodic defect and the second non-periodic defect of the object 9 are detected. In the inspection apparatus 1 shown in FIG. 1, substantially like in above-described Step S11, the picked-up image 95 (see FIG. 13) is acquired. Then, the control part 42 controls the moving mechanism 28 to change the projection distance L1 and then the image pickup part 24 acquires the picked-up image 95. By repeating the change of the projection distance L1 and the acquisition of the picked-up image 95 a predetermined number of times, acquired are a plurality of picked-up images 95 having different projection distances L1, respectively (Step S21). The plurality of picked-up images 95 are transferred from the image pickup part 24 to the computer 12 and stored in the storage part 41 (see FIG. 6). In Step S21, acquired are the picked-up images 95 having projection distances L1 of 30 mm, 50 mm, 100 mm, 150 mm, 200 mm, 250 mm, 300 mm, and 350 mm, respectively. Further, the projection distance L1 may be changed in various manners and the number of picked-up images 95 may be changed in various manners within a range not less than 2.

Subsequently, the profile acquisition part 44 sets the above-described inspection region 96 for each picked-up image 95. Though the number of inspection regions 96 set for each picked-up image 95 is 1 in the following description, a plurality of inspection regions 96 may be set for each picked-up image 95. The profile acquisition part 44 acquires the brightness profile of the inspection region 96 for each picked-up image 95 (Step S22).

In the defect detection part 43, the evaluation value calculation part 47 (see FIG. 6) detects a non-periodic brightness variation in the brightness profile of one picked-up image 95 (Step S23). The non-periodic brightness variation corresponds to a non-periodic defect on the object 9 (specifically, the first non-periodic defect or the second non-periodic defect). In a case where the above-described periodic brightness variation is included in the brightness profile, for example, the detection of the non-periodic brightness variation is performed by removing the periodic brightness variation from the brightness profile and then detecting a relatively large brightness variation (for example, having a peak far away from the average brightness of the brightness profile by a predetermined threshold value or more) from the remaining brightness variations. FIG. 17 is a view schematically showing the brightness profile in which one non-periodic brightness variation exists. Further, in Step S23, in a case where there is no relatively large brightness variation in the brightness profile of the inspection region 96, it is determined that the object 9 is a good product.

In a case where the non-periodic defect corresponding to the non-periodic brightness variation is the first non-periodic defect which is a scratch or a deposit on the surface of the object 9, since the observation light 71 is diffusely reflected by the first non-periodic defect, the observation light 71 hardly enters a region on the image pickup auxiliary member 23, corresponding to the first non-periodic defect. Therefore, the non-periodic brightness variation corresponding to the first non-periodic defect becomes a point-like or line-like portion (i.e., a black point or a black line and hereinafter, referred to as a "black point or the like") having a color darker than that of a surrounding portion. The non-periodic brightness variation corresponding to the first non-periodic defect does not vary so much largely even when the projection distance L1 is changed.

On the other hand, in a case where the non-periodic defect corresponding to the non-periodic brightness variation is the second non-periodic defect which is a mixture inside the object 9, since the observation light 71 is specularly reflected by a resin layer wrapping the second non-periodic defect, the specularly-reflected lights reinforce one another around a region on the image pickup auxiliary member 23, corresponding to the second non-periodic defect. Therefore, the non-periodic brightness variation corresponding to the second non-periodic defect has a substantially annular region brighter than a surrounding region between the above-described black point or the like and the surrounding region. In the non-periodic brightness variation corresponding to the second non-periodic defect, since the above-described specularly-reflected lights are spread largely when the projection distance L1 becomes larger, the black point or the like becomes larger and the above-described substantially annular bright region also becomes larger.

The evaluation value calculation part 47 calculates an evaluation value of the above-described non-periodic brightness variation. Further, the evaluation value calculation part 47 detects the non-periodic brightness variation in the brightness profile of the picked-up image 95 other than the above one picked-up image 95, corresponding to the above non-periodic brightness variation, and calculates an evaluation value of the detected non-periodic brightness variation. In other words, the evaluation value calculation part 47 obtains an evaluation value of the non-periodic brightness variation for each of the above-described plurality of picked-up images 95 (Step S24).

The evaluation value is obtained, for example, by dividing a larger one of A and B which are respective differences between a downward peak 971 corresponding to the black point or the like in FIG. 17 and upward peaks 972 and 973 adjacent to both sides of the peak 971 by a distance W between the peaks 972 and 973. In other words, the evaluation value is obtained as Max (A, B)/W.

Further, the evaluation value obtained in Step S24 is not limited to the value obtained by the above-described formula Max (A, B) / W, but may be changed in various manners only if the evaluation value has at least one of the following characteristic features. One characteristic feature of the evaluation value lies in that the evaluation value becomes larger as Max (A, B) which are respective differences between the downward peak 971 and the upward peaks 972 and 973 become larger. The other characteristic feature of the evaluation value lies in that the evaluation value becomes smaller as the distance W between the above-described peak 972 and the peak 973 becomes larger. For example, the evaluation value may be (Max (A, B))² / W². Alternatively, the evaluation value may be Max (A, B).

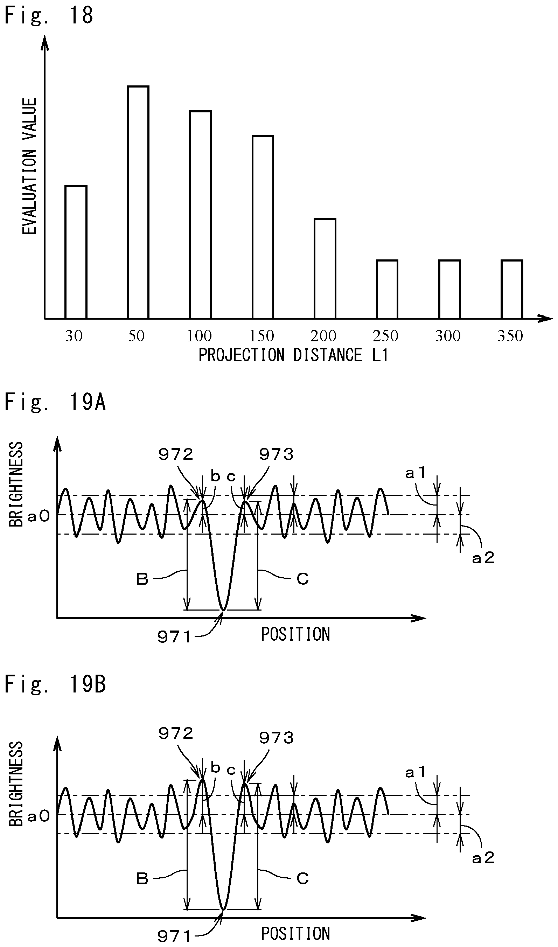

The non-periodic defect discrimination part 46 (see FIG, 6) obtains an evaluation value variation index indicating a degree of variation of the evaluation value in the plurality of picked-up images 95 (Step S25). The evaluation value variation index is obtained, for example, by arranging the evaluation values of the non-periodic brightness variations in the plurality of picked-up images 95 having different projection distances L1, respectively, in ascending order of the projection distance L1 as shown in FIG. 18 and adopting an arithmetic average of differentials of all adjacent two evaluation values (i.e., absolute values of the differences of all adjacent two evaluation values). The evaluation value variation index obtained in Step S25 may be changed in various manners only if the evaluation value variation index has a characteristic feature that the evaluation value variation index becomes larger as the degree of variation in the evaluation value with respect to the variation in the projection distance L1 becomes larger and the evaluation value variation index becomes smaller as the degree of variation in the evaluation value with respect to the variation in the projection distance L1 becomes smaller.

As described above, in a case where the non-periodic defect is the first non-periodic defect which is a scratch or a deposit on the surface of the object 9, the non-periodic brightness variation in the brightness profile is not changed so much even when the projection distance L1 is changed. On the other hand, in a case where the non-periodic defect is the second non-periodic defect which is a mixture inside the object 9, the non-periodic brightness variation in the brightness profile is changed relatively largely when the projection distance L1 is changed. When the evaluation value variation index of the non-periodic brightness variation in the brightness profile is not larger than a predetermined threshold value, the non-periodic defect discrimination part 46 determines that the non-periodic defect corresponding to the non-periodic brightness variation is the first non-periodic defect (Steps S26 and S27). Further, when the evaluation value variation index of the non-periodic brightness variation in the brightness profile is larger than a predetermined threshold value, the non-periodic defect discrimination part 46 determines that the non-periodic defect corresponding to the non-periodic brightness variation is the second non-periodic defect (Steps S26 and S28). The threshold value is determined in advance on the basis of the picked-up image 95 or the like of the object 9 in which the first non-periodic defect and the second non-periodic defect exist, and stored in the storage part 41.

In above-described Step S21, though the plurality of picked-up images 95 corresponding to the plurality of projection distances L1 are acquired in a state where the measurement angle θ is fixed to be one angle, the measurement angle θ is also changed, and the plurality of picked-up images 95 corresponding to the plurality of measurement angles θ may be also acquired. In a case where the non-periodic defect is the first non-periodic defect which is a scratch or a deposit on the surface of the object 9, the non-periodic brightness variation corresponding to the non-periodic defect is changed relatively largely when the measurement angle θ is changed. On the other hand, in a case where the non-periodic defect is the second non-periodic defect which is a mixture inside the object 9, the non-periodic brightness variation corresponding to the non-periodic defect is not changed so much even when the measurement angle θ is changed.

In the acquisition of the picked-up image 95 while changing the measurement angle θ, for example, the plurality of picked-up images 95 are acquired while changing the projection distance L1 in a state where the measurement angle θ is 0°, and after the measurement angle θ is changed to 30°, the plurality of picked-up images 95 are acquired while changing the projection distance L1. Further, after the measurement angle θ is changed to 60°, the plurality of picked-up images 95 are acquired while changing the projection distance L1, and after the measurement angle θ is further changed to 80°, the plurality of picked-up images 95 are acquired while changing the projection distance L1. In other words, the plurality of picked-up images 95 having different projection distances L1, respectively, are acquired with respect to the measurement angle θ = 0°, 30° 60 ; and 80°. Furthermore, the size of the measurement angle θ may be changed in various manners within a range not smaller than 0°and smaller than 90 ; and the number of the plurality of picked-up images 95 may be changed in various manners within a range not less than 2.

In this case, in Step S22, the plurality of brightness profiles are acquired from the plurality of picked-up images 95 having different projection distances L1, respectively, with respect to each of the plurality of measurement angles θ. Further, in Steps S23 to S24, the plurality of evaluation values of the non-periodic brightness variations are obtained from the plurality of picked-up images 95 having different projection distances L1, respectively, with respect to each of the plurality of measurement angles θ.

In Step S25, the evaluation value variation index is obtained on the basis of the variation of the plurality of evaluation values at each measurement angle θ. Specifically, first, a value obtained with respect to each of the plurality of measurement angles θ by the same method as that of obtaining the above-described evaluation value variation index is assumed as a "provisional variation index". Then, among the plurality of provisional variation indices corresponding to the plurality of measurement angles θ, respectively, a value obtained by dividing the minimum provisional variation index by the maximum provisional variation index is acquired as the evaluation value variation index.

In Steps S26 and S27, in a case where the evaluation value variation index is not larger than a predetermined threshold value (in other words, in a case where the change in the non-periodic brightness variation with respect to the change of the measurement angle θ is relatively large), it is determined that the non-periodic defect corresponding to the non-periodic brightness variation is the first non-periodic defect. Further, in a case where the evaluation value variation index of the non-periodic brightness variation in the brightness profile is larger than the predetermined threshold value (in other words, in a case where the change in the non-periodic brightness variation with respect to the change of the measurement angle θ is relatively small), it is determined that the non-periodic defect corresponding to the non-periodic brightness variation is the second non-periodic defect. The above-described threshold value in a case where the projection distance L1 and the measurement angle θ are changed in Step S21 is different from the threshold value in a case where only the projection distance L1 is changed and the measurement angle θ is not changed in Step S21.

In the inspection apparatus 1, Steps S11 to S18 (i.e., the discrimination between the first periodic defect and the second periodic defect and the detection of the non-periodic defect) may be performed as described above, or only Steps S11 to S16 (i.e., the discrimination between the first periodic defect and the second periodic defect) may be performed. Further, in the inspection apparatus 1, instead of Steps S17 to S18 (i.e., the detection of the non-periodic defect) among Steps S11 to S18, Steps S21 to S27 (i.e., the discrimination between the first non-periodic defect and the second non-periodic defect) may be performed. In this case, which of Steps S11 to S16 and Steps S21 to S27 may be performed first.

As described above, the inspection apparatus 1 detects a defect of the sheet-like or plate-like object 9 having translucency. The inspection apparatus 1 includes the object holding part 21, the auxiliary member holding part 26, the lighting part 22, the image pickup part 24, and the defect detection part 43. The object holding part 21 holds the object 9. The auxiliary member holding part 26 holds the sheet-like or plate-like image pickup auxiliary member 23 to be parallel to the object 9. The lighting part 22 emits the observation light 71 onto the object 9. The image pickup part 24 is disposed on the opposite side to the object 9 with the image pickup auxiliary member 23 interposed therebetween. The image pickup part 24 has the optical axis J2 parallel to the normal direction of the object 9 and acquires the picked-up image 95 by picking up an image formed on the image pickup auxiliary member 23 with the observation light 71 transmitted through the object 9. The defect detection part 43 detects a defect of the object 9 on the basis of the picked-up image 95.

A defect detectable by the defect detection part 43 includes the first periodic defect and the second periodic defect. The first periodic defect includes a plurality of streaks each extending linearly along the first direction (the width direction 92 in the above-described exemplary case) and being periodically arranged in the second direction (the transfer direction 91 in the above-described exemplary case) perpendicular to the first direction on the object 9. The second periodic defect includes non-streaky defects which are periodically arranged in the second direction on the object 9.

The defect detection part 43 includes the profile acquisition part 44 and the periodic defect discrimination part 45. The profile acquisition part 44 sets the plurality of inspection regions 96 each extending linearly in parallel with the second direction at the plurality of inspection positions, respectively, in the first direction in the picked-up image 95. The profile acquisition part 44 acquires the plurality of brightness profiles each representing the brightness change in the second direction, in the plurality of inspection regions, respectively. The periodic defect discrimination part 45 detects the periodic brightness variation for each of the plurality of brightness profiles. Then, the periodic defect discrimination part 45 determines that the first periodic defect exists when a periodic brightness variation with the same cycle exists common to the plurality of brightness profiles and determines that the second periodic defect exists when a periodic brightness variation with the same cycle as that of a periodic brightness variation existing in one of the plurality of brightness profiles does not exist in the other brightness profiles.

In the inspection apparatus 1, it is possible to detect the periodic defect of the object 9 while automatically discriminating the type of the periodic defect. As a result, in accordance with the type of the periodic defect, it is possible to accurately and efficiently adjust the manufacturing apparatus 8 (see FIG. 7) of the object 9, or the like. In a case where the first periodic defect including a plurality of streaks is detected as the defect of the object 9, for example, in the manufacturing apparatus 8, by adjusting the difference in the rotation speed of the forming rolls 85a to 85c, or the like, it is possible to reduce or prevent the first periodic defect.

As described above, it is preferable that a defect detectable by the defect detection part 43 should further include the non-periodic defect which is a scratch or a deposit on the surface of the object 9 or a mixture mixed into the object 9. It is preferable that the defect detection part 43 should further include the non-periodic defect discrimination part 46 for detecting the non-periodic brightness variation in at least one brightness profile among the above-described plurality of brightness profiles and determining the non-periodic brightness variation as the non-periodic defect. It is thereby possible to also automatically detect the non-periodic defect of the object 9 as well as to discriminate the above-described first periodic defect and the second periodic defect. As a result, it is possible to perform defect inspection of the object 9 with higher accuracy.

As described above, it is preferable that the inspection apparatus 1 should further include the rotation mechanism 27 and the control part 42. The rotation mechanism 27 relatively rotates the object 9, the image pickup auxiliary member 23, and the image pickup part 24 about the respective rotation axes J3, J4 perpendicular to the optical axis J1 of the lighting part 22 relative to the optical axis J1 of the lighting part 22 while maintaining the distance (i.e., the projection distance L1) between the object 9 and the image pickup auxiliary member 23 in the optical axis direction of the lighting part 22 and the distance between the image pickup auxiliary member 23 and the image pickup part 24 in the optical axis direction of the image pickup part 24, to thereby change the measurement angle θ which is an angle formed by the optical axis J1 of the lighting part 22 and the normal direction of the object 9. The control part 42 controls the image pickup part 24 and the rotation mechanism 27, to thereby cause the image pickup part 24 to acquire the picked-up image 95 for the defect detection performed by the periodic defect discrimination part 45 while determining the measurement angle θ as the predetermined first measurement angle, and to thereby cause the image pickup part 24 to acquire the picked-up image 95 for the defect detection performed by the non-periodic defect discrimination part 46 while determining the measurement angle θ as the predetermined second measurement angle different from the first measurement angle.

Thus, by detecting the periodic defect on the basis of the picked-up image 95 acquired at the first measurement angle complying with the characteristics of the periodic defect and detecting the non-periodic defect on the basis of the picked-up image 95 acquired at the second measurement angle complying with the characteristics of the non-periodic defect, it is possible to detect both the periodic defect and the non-periodic defect with high accuracy.

Further, in the inspection apparatus 1, the control part 42 may control the image pickup part 24 and the moving mechanism 28, to thereby cause the image pickup part 24 to acquire the picked-up image 95 for the defect detection performed by the periodic defect discrimination part 45 while determining the projection distance L1 as a predetermined first projection distance, and to thereby cause the image pickup part 24 to acquire the picked-up image 95 for the defect detection performed by the non-periodic defect discrimination part 46 while determining the projection distance L1 as a predetermined second projection distance different from the first projection distance. Also in this case, it is possible to detect both the periodic defect and the non-periodic defect with high accuracy.

As described above, it is preferable that the inspection apparatus 1 should further include the moving mechanism 28 and the control part 42. The moving mechanism 28 relatively moves the image pickup auxiliary member 23 and the image pickup part 24 relative to the object 9 in the optical axis direction of the lighting part 22 while maintaining the distance between the image pickup auxiliary member 23 and the image pickup part 24 in the optical axis direction of the image pickup part 24, to thereby change the projection distance L1 which is a distance between the image pickup auxiliary member 23 and the object 9 in the optical axis direction of the lighting part 22. The control part 42 controls the image pickup part 24 and the moving mechanism 28, to thereby cause the image pickup part 24 to acquire the plurality of picked-up images 95 having different projection distances L1, respectively. The non-periodic defect includes the first non-periodic defect which is a scratch or a deposit on the surface of the object 9 and the second non-periodic defect which is a mixture mixed into the object 9.

Preferably, the profile acquisition part 44 sets the inspection region 96 extending linearly in parallel with the second direction at the predetermined inspection position in the first direction for each of the plurality of picked-up images 95 and acquires the brightness profile representing the brightness change in the second direction in the inspection region 96. It is preferable that the defect detection part 43 should further include the evaluation value calculation part 47. The evaluation value calculation part 47 detects the non-periodic brightness variation in the brightness profile of one picked-up image 95 among the plurality of picked-up images 95 and obtains the evaluation value of the non-periodic brightness variation for each of the plurality of picked-up images 95. It is preferable that the non-periodic defect discrimination part 46 should determine that the non-periodic defect is the first non-periodic defect when the evaluation value variation index indicating a degree of variation of the evaluation value in the plurality of picked-up images 95 with respect to the non-periodic brightness variation is not larger than the predetermined threshold value, and should determine that the non-periodic defect is the second non-periodic defect when the evaluation value variation index is larger than the above-described threshold value. It is thereby possible to detect the non-periodic defect of the object 9 while automatically discriminating the type of the non-periodic defect.

It is further preferable that the inspection apparatus 1 should further include the rotation mechanism 27. The rotation mechanism 27 relatively rotates the object 9, the image pickup auxiliary member 23, and the image pickup part 24 about the respective rotation axes J3, J4 perpendicular to the optical axis J1 of the lighting part 22 relative to the optical axis J1 of the lighting part 22 while maintaining the distance (i.e., the projection distance L1) between the object 9 and the image pickup auxiliary member 23 in the optical axis direction of the lighting part 22 and the distance between the image pickup auxiliary member 23 and the image pickup part 24 in the optical axis direction of the image pickup part 24, to thereby change the measurement angle θ which is an angle formed by the optical axis J1 of the lighting part 22 and the normal direction of the object 9. Preferably, the control part 42 controls the image pickup part 24, the moving mechanism 28, and the rotation mechanism 27, to thereby acquire the plurality of picked-up images 95 having different projection distances L1, respectively, at each of the plurality of measurement angles θ. Then, the profile acquisition part 44 acquires the plurality of brightness profiles from the above-described plurality of picked-up images 95 for each of the plurality of measurement angles θ. Further, the evaluation value calculation part 47 obtains the plurality of evaluation values of the non-periodic brightness variation from the above-described plurality of picked-up images 95 for each of the plurality of measurement angles θ. Then, it is preferable that the evaluation value variation index should be obtained on the basis of a variation of the plurality of evaluation values at each of the plurality of measurement angles θ. It is thereby possible to perform automatic discrimination of the type of the non-periodic defect with high accuracy.

In the inspection apparatus 1, above-described Steps S11 to S18 (i.e., the discrimination between the first periodic defect and the second periodic defect and the detection of the non-periodic defect) do not necessarily need to be performed but only Steps S21 to S27 (i.e., the discrimination between the first non-periodic defect and the second non-periodic defect) may be performed.

In this case, the inspection apparatus 1 for detecting a defect of the sheet-like or plate-like object 9 having translucency includes the object holding part 21, the auxiliary member holding part 26, the lighting part 22, the image pickup part 24, the moving mechanism 28, the defect detection part 43, and the control part 42. The object holding part 21 holds the object 9. The auxiliary member holding part 26 holds the sheet-like or plate-like image pickup auxiliary member 23 to be parallel to the object 9. The lighting part 22 emits the observation light 71 to the object 9. The image pickup part 24 is disposed on the opposite side to the object 9 with the image pickup auxiliary member 23 interposed therebetween. The image pickup part 24 has the optical axis J2 parallel to the normal direction of the object 9, and acquires the picked-up image 95 by picking up an image formed on the image pickup auxiliary member 23 with the observation light 71 transmitted through the object 9. The moving mechanism 28 relatively moves the image pickup auxiliary member 23 and the image pickup part 24 relative to the object 9 in the optical axis direction of the lighting part 22 while maintaining the distance between the image pickup auxiliary member 23 and the image pickup part 24 in the optical axis direction of the image pickup part 24, to thereby change the projection distance L1 which is a distance between the image pickup auxiliary member 23 and the object 9 in the optical axis direction of the lighting part 22. The defect detection part 43 detects a defect of the object 9 on the basis of the picked-up image 95. The control part 42 controls the image pickup part 24 and the moving mechanism 28, to thereby cause the image pickup part 24 to acquire the plurality of picked-up images 95 having different projection distances L1, respectively.

A defect detectable by the defect detection part 43 includes the first non-periodic defect which is a scratch or a deposit on the surface of the object 9 and the second non-periodic defect which is a mixture mixed into the object 9.

The defect detection part 43 includes the profile acquisition part 44, the evaluation value calculation part 47, and the non-periodic defect discrimination part 46. The profile acquisition part 44 sets the inspection region 96 at the predetermined inspection position in the first direction (the width direction 92 in the above-described exemplary case), which extends linearly in parallel with the second direction (the transfer direction 91 in the above-described exemplary case) perpendicular to the first direction, for each of the plurality of picked-up images 95. The profile acquisition part 44 acquires the brightness profile representing the brightness change in the second direction in the inspection region 96. The evaluation value calculation part 47 detects the non-periodic brightness variation in the brightness profile of one picked-up image 95 among the plurality of picked-up images 95 and obtains the evaluation value of the non-periodic brightness variation for each of the plurality of picked-up images 95. The non-periodic defect discrimination part 46 determines that the non-periodic defect is the first non-periodic defect when the evaluation value variation index indicating a degree of variation of the evaluation value in the plurality of picked-up images 95 with respect to the non-periodic brightness variation is not larger than the predetermined threshold value, and determines that the non-periodic defect is the second non-periodic defect when the evaluation value variation index is larger than the threshold value. It is thereby possible to detect the non-periodic defect of the object 9 while automatically discriminating the type of the non-periodic defect. As a result, in accordance with the type of the non-periodic defect, it is possible to efficiently adjust the manufacturing apparatus 8 (see FIG. 7) of the object 9, or the like, and remove a defective product of the object 9.

As described above, it is preferable that the inspection apparatus 1 should further include the rotation mechanism 27. The rotation mechanism 27 relatively rotates the object 9, the image pickup auxiliary member 23, and the image pickup part 24 about the respective rotation axes J3, J4 perpendicular to the optical axis J1 of the lighting part 22 relative to the optical axis J1 of the lighting part 22 while maintaining the distance (i.e., the projection distance L1) between the object 9 and the image pickup auxiliary member 23 in the optical axis direction of the lighting part 22 and the distance between the image pickup auxiliary member 23 and the image pickup part 24 in the optical axis direction of the image pickup part 24, to thereby change the measurement angle θ which is an angle formed by the optical axis J1 of the lighting part 22 and the normal direction of the object 9. Preferably, the control part 42 controls the image pickup part 24, the moving mechanism 28, and the rotation mechanism 27, to thereby acquire the plurality of picked-up images 95 having different projection distances L1, respectively, at each of the plurality of measurement angles θ. Then, the profile acquisition part 44 acquires the plurality of brightness profiles from the above-described plurality of picked-up images 95 for each of the plurality of measurement angles θ. Further, the evaluation value calculation part 47 obtains the plurality of evaluation values of the non-periodic brightness variation from the above-described plurality of picked-up images 95 for each of the plurality of measurement angles θ. Then, it is preferable that the evaluation value variation index should be obtained on the basis of a variation of the plurality of evaluation values at each of the plurality of measurement angles θ. It is thereby possible to perform automatic discrimination of the type of the non-periodic defect with high accuracy.

In the inspection apparatus 1, various defect inspections other than the inspection shown in above-described Steps S11 to S18 and the Steps S21 to S27 may be performed. In this case, the inspection apparatus 1 for detecting a defect of the sheet-like or plate-like object 9 having translucency includes the object holding part 21, the auxiliary member holding part 26, the lighting part 22, the image pickup part 24, the rotation mechanism 27, and the defect detection part 43. The object holding part 21 holds the object 9. The auxiliary member holding part 26 holds the sheet-like or plate-like image pickup auxiliary member 23 to be parallel to the object 9. The lighting part 22 emits the observation light 71 to the object 9. The image pickup part 24 is disposed on the opposite side to the object 9 with the image pickup auxiliary member 23 interposed therebetween. The image pickup part 24 has the optical axis J2 parallel to the normal direction of the object 9, and acquires the picked-up image 95 by picking up an image formed on the image pickup auxiliary member 23 with the observation light 71 transmitted through the object 9. The rotation mechanism 27 relatively rotates the object 9, the image pickup auxiliary member 23, and the image pickup part 24 about the respective rotation axes J3, J4 perpendicular to the optical axis J1 of the lighting part 22 relative to the optical axis J1 of the lighting part 22 while maintaining the distance (i.e., the projection distance L1) between the object 9 and the image pickup auxiliary member 23 in the optical axis direction of the lighting part 22, and the distance between the image pickup auxiliary member 23 and the image pickup part 24 in the optical axis direction of the image pickup part 24, to thereby change the measurement angle θ which is an angle formed by the optical axis J1 of the lighting part 22 and the normal direction of the object 9. The defect detection part 43 detects a defect of the object 9 on the basis of the picked-up image 95. It is thereby possible to acquire the picked-up image 95 at the measurement angle θ suitable for each of various types of defects to be detected. As a result, it is possible to detect various types of defects with high accuracy.

As described above, it is preferable that the inspection apparatus 1 should further include the moving mechanism 28. The moving mechanism 28 relatively moves the image pickup auxiliary member 23 and the image pickup part 24 relative to the object 9 in the optical axis direction of the lighting part 22 while maintaining the distance between the image pickup auxiliary member 23 and the image pickup part 24 in the optical axis direction of the image pickup part 24, to thereby change the projection distance L1 which is a distance between the image pickup auxiliary member 23 and the object 9 in the optical axis direction of the lighting part 22. It is thereby possible to acquire the picked-up image 95 at the projection distance L1 suitable for each of various types of defects to be detected. As a result, it is possible to detect various types of defects with higher accuracy.

The method of detecting the first non-periodic defect and the second non-periodic defect of the object 9 is not limited to the above-described example shown in Steps S21 to S27 but may be changed in various manners. Hereinafter, in the brightness profile in which the non-periodic brightness variation exists as shown in FIGs. 19A and 19B, another exemplary method of determining whether this non-periodic brightness variation is the first non-periodic defect or the second non-periodic defect will be described.

In the brightness profile shown in FIGs. 19A and 19B, the non-periodic brightness variation includes a lower peak 971 which is a downward peak corresponding to the above-described black point or the like, and a first upper peak 972 and a second upper peak 973 which are upward peaks adjacent to both sides of the lower peak 971. In the inspection apparatus 1, the non-periodic defect discrimination part 46 (see FIG. 6) acquires background brightness a0. The background brightness a0 shown in each of FIGs. 19A and 19B is an average of the brightness variation (i.e., the average brightness) in the brightness profile shown in each of FIGs. 19A and 19B. Further, the non-periodic defect discrimination part 46 acquires upward and downward half amplitudes a1 and a2 of the brightness variation in the brightness profile. The background brightness a0 is the average brightness in all regions of the brightness profile except the non-periodic brightness variation. Furthermore, the half amplitudes a1 and a2 are respective averages of the upward half amplitudes and the downward half amplitudes in all the regions of the brightness profile except the non-periodic brightness variation. Further, in a case where the ratio occupied by the non-periodic brightness variation in the brightness profile is relatively small, the background brightness a0 and the half amplitudes a1 and a2 may be each obtained as an average in all the regions including the non-periodic brightness variation in the brightness profile. Subsequently, the non-periodic defect discrimination part 46 acquires a brightness difference b between the first upper peak 972 and the background brightness a0, and a brightness difference c between the second upper peak 973 and the background brightness a0. Furthermore, the brightness differences b and c are each an absolute value (in other words, not smaller than 0).

As described above, in a case where the non-periodic defect is the second non-periodic defect, between the above-described black point or the like and a surrounding region in the non-periodic brightness variation, there is a substantially annular region which is brighter than the surrounding region. On the other hand, in a case where the non-periodic defect is the first non-periodic defect, the region around the black point or the like does not become so much bright. On the basis of the characteristic feature, the non-periodic defect discrimination part 46 determines that the non-periodic defect corresponding to the non-periodic brightness variation is the first non-periodic defect when the brightness difference b and the brightness difference c are each not larger than Max (a1, a2) indicating a larger one among the half amplitude a1 and the half amplitude a2 as shown in FIG. 19A. Further, the non-periodic defect discrimination part 46 determines that the non-periodic defect corresponding to the non-periodic brightness variation is the second non-periodic defect when at least one of the brightness difference b and the brightness difference c is larger than Max (a1, a2) as shown in FIG. 19B. It is thereby possible to detect the non-periodic defect of the object 9 while automatically discriminating the type of the non-periodic defect with high accuracy.

Further, a peak brightness value of the lower peak 971 may be not smaller than the background brightness a0, but in terms of discriminating the type of the non-periodic defect with high accuracy, it is preferable that the peak brightness value should be smaller than the background brightness. In other words, assuming the brightness difference between the lower peak 971 and the first upper peak 972 as B and the brightness difference between the lower peak 971 and the second upper peak 973 as C, it is preferable that at least one of (b/B) and (c/C) should be smaller than 1 and further preferable that both of them should be each smaller than 1.

Furthermore, as the above-described background brightness a0, the average brightness of the brightness profiles in the inspection region 96 corresponding to the above-described brightness profile in which the non-periodic brightness variation exists and another inspection region 96 adjacent thereto may be used. Further, the average brightness of the brightness profile in any other inspection region 96 in which it is confirmed that the non-periodic brightness variation does not exist may be used as the background brightness a0. Alternatively, the average brightness of the brightness profile which was acquired in the past, for the object 9 which is a good product, may be used as the background brightness a0.

As described above, in the inspection apparatus 1, it is preferable that the lighting part 22 should include the light source part 220 and the lens 223 and the lens 223 should convert the light from the light source part 220 into the observation light 71 which is parallel light and emit the observation light 71 to the object 9. Further, it is preferable that a distance L3 between the lens 223 and the image pickup auxiliary member 23 in the optical axis direction (the X direction in the above-described exemplary case) of the lighting part 22 should not be smaller than a half of focal length of the lens 223. It is thereby possible to suppress the secondary real image of the light source 221 from being projected onto the image pickup auxiliary member 23 by the lens 223 and suppress the secondary real image from being included in the picked-up image acquired by the image pickup part 24. As a result, it is possible to detect various types of defects with higher accuracy. Furthermore, in terms of suppressing the above-described secondary real image from being projected onto the image pickup auxiliary member 23, it is preferable to provide an antireflection film on the lens surface of the lens 223.

In the above-described inspection apparatus 1, various modifications can be made.

For example, the respective configurations of the rotation mechanism 27 and the moving mechanism 28 are not limited to the above-described ones but may be changed in various manners.

The rotation axes J3 and J4 do not necessarily need to extend in the Z direction only if the rotation axes are perpendicular to the optical axis J1 of the lighting part 22, but the rotation axes J3 and J4 may extend, for example, in the Y direction. The rotation mechanism 27 has only to relatively rotate the image pickup auxiliary member 23 and the image pickup part 24 relative to the optical axis J1 of the lighting part 22, and for example, may rotate the lighting part 22, the object 9, and the object holding part 21 while maintaining the relative positions thereof. The moving mechanism 28 has only to relatively move the image pickup auxiliary member 23 and the image pickup part 24 relative to the object 9 in the optical axis direction (i.e., the X direction) of the lighting part 22, and for example, may move the lighting part 22, the object 9, and the object holding part 21 in the X direction while maintaining the relative positions thereof.

In the above-described exemplary case, though it is determined, in Step S13, that the object 9 is a good product in a case where there is no relatively large brightness variation in the brightness profile of the inspection region 96, the determination on whether the object 9 is good or defective may be performed by any other method. For example, first, an object which is confirmed to be good in advance (hereinafter, referred to as a "reference object") is imaged at a predetermined measurement angle θ (for example, 30°, hereinafter, referred to as a "reference angle") and the acquired picked-up image is stored in the storage part 41 as a reference image. Further, the brightness profile in the inspection region of the reference image is also stored in the storage part 41 as a reference profile. It is assumed that a plurality of streaks having a density difference within tolerance exist in the reference image. Subsequently, the object 9 to be subjected to the defect inspection is imaged at the same measurement angle θ (i.e., the reference angle) as above, and a brightness profile in the inspection region 96 of the acquired picked-up image 95 is obtained. Subsequently, the brightness profile of the picked-up image 95 and the brightness profile (i.e., the reference profile) of the reference image are compared with each other and acquisition of the picked-up image 95 and the brightness profile is repeated while changing the measurement angle θ until respective differences (i.e., density differences of the streaks) between the upward peak and downward peak corresponding to the streaks in both the brightness profiles become substantially the same. Then, the measurement angle θ of the object 9 at which the respective density differences of the streaks become substantially the same in the brightness profile of the picked-up image 95 and the reference profile is obtained, and it is determined that the object 9 is a good product when the measurement angle θ is not smaller than the reference angle, and that the first periodic defect (i.e., a plurality of streaks out of tolerance) exists when the measurement angle θ is smaller than the reference angle.

Alternatively, training data is generated by using a plurality of images or the like of the object which is confirmed to be good in advance and a learned model is generated by machine learning using the training data, and the detection of the first periodic defect or the like and discrimination of the defect type may be performed by using the learned model.

The observation light 71 does not necessarily need to be parallel light but may be, for example, diffused light. Further, in a case where the diffused light is used as the observation light 71, when the projection distance L1 is changed, the size of a region on the object 9, which is acquired as the picked-up image 95, is changed and the quantity of the observation light 71 entering the image pickup part 24 is also changed. For this reason, before the defect detection based on the picked-up image 95, the picked-up image 95 is corrected in accordance with the change in the size of the region and the change in the quantity of light. In a case where the projection distance L1 is increased, for example, correction is performed so that the picked-up image 95 can be contracted and the brightness difference of the picked-up image 95 can be emphasized.

Though the inspection apparatus 1 is an apparatus independent of the manufacturing apparatus 8 in the above description, this is only one exemplary case. On a transfer path of the sheet member 90 manufactured in the manufacturing apparatus 8, for example, the defect inspection of the object 9 may be performed, where the object 9 is each portion of the sheet member 90 which is a continuous member. In other words, the configuration of the inspection apparatus 1 may be used for an in-line inspection in a manufacturing line of the sheet member 90.

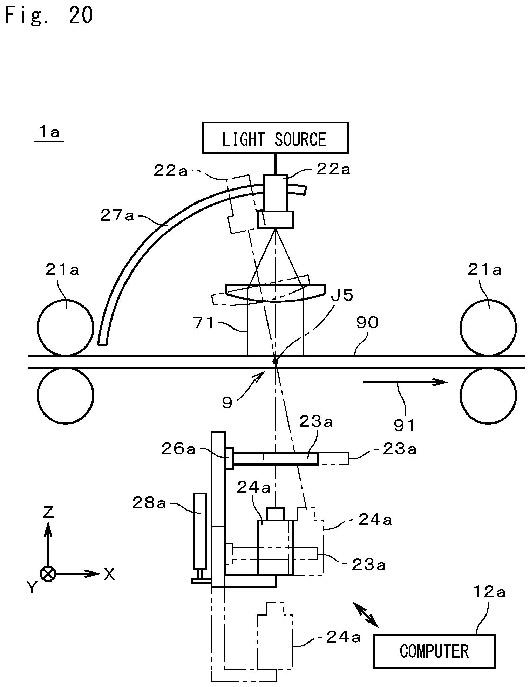

FIG. 20 is an elevational view showing an exemplary configuration of an inspection apparatus 1a used for the in-line inspection. In the inspection apparatus 1a, an object holding part 21a is a transfer roller for holding the sheet member 90 and transferring the sheet member 90 in the transfer direction 91. A lighting part 22a is disposed above (i.e., on the (+Z) side of) the sheet member 90, and an image pickup auxiliary member 23a, an auxiliary member holding part 26a, and an image pickup part 24a are disposed below (i.e., on the (-Z) side of) the sheet member 90. A rotation mechanism 27a rotates the lighting part 22 about a rotation axis J5 extending in the Y direction, as indicated by the two-dot chain line. At that time, the image pickup auxiliary member 23a, the auxiliary member holding part 26a, and the image pickup part 24a are slided in the X direction as necessary in order to receive the observation light 71 from the lighting part 22a. A moving mechanism 28a moves the image pickup auxiliary member 23a, the auxiliary member holding part 26a, and the image pickup part 24a in the Z direction, as indicated by the two-dot chain line. Also at that time, the image pickup auxiliary member 23a, the auxiliary member holding part 26a, and the image pickup part 24a are slided in the X direction as necessary in order to receive the observation light 71 from the lighting part 22a.

Also in the inspection apparatus 1a, in the same manner as above, it is possible to detect the periodic defect and the non-periodic defect of the object 9 (i.e., each portion of the sheet member 90) while automatically discriminating the type of the defect. In the inspection apparatus 1a, in accordance with the type of the detected defect, adjustment information is transferred from a computer 12a to the manufacturing apparatus 8 (see FIG. 7) and adjustment of the manufacturing apparatus 8 may be automatically performed so as to reduce the defects. In a case where the first periodic defect is detected, for example, in accordance with the characteristics of the first periodic defect, such as the cycle or the like, a load of the forming rolls 85a to 85c, or the like, is automatically adjusted. Further, when the peeling mark of the second periodic defect is detected, the temperature of the forming rolls 85a to 85c, the tension of the sheet-like member, or the like is automatically adjusted. When the falling deviation defect (also referred to as a "peak contact defect") of the second periodic defect is detected, the distance between the die 84 and the forming rolls 85a and 85b is automatically adjusted.

The configurations in the above-described preferred embodiment and variations may be combined as appropriate only if those do not conflict with one another.

While the invention has been shown and described in detail, the foregoing description is in all aspects illustrative and not restrictive. It is therefore understood that numerous modifications and variations can be devised without departing from the scope of the invention.

### REFERENCE SIGNS LIST

- 1, 1a: Inspection apparatus
- 9: Object
- 21, 21a: Object holding part
- 22, 22a: Lighting part
- 23, 23a: Image pickup auxiliary member
- 24, 24a: Image pickup part
- 26, 26a: Auxiliary member holding part
- 27, 27a: Rotation mechanism
- 28, 28a: Moving mechanism
- 42: Control part
- 43: Defect detection part
- 44: Profile acquisition part
- 45: Periodic defect discrimination part
- 46: Non-periodic defect discrimination part
- 47: Evaluation value calculation part
- 71: Observation light
- 91: Transfer direction
- 92: Width direction
- 95: Picked-up image
- 96: Inspection region
- 220: Light source part
- 223: Lens
- J1: Optical axis (of lighting part)
- J2: Optical axis (of image pickup part)
- J3, J4, J5: Rotation axis
- L1: Projection distance
- S11 to S18, S21 to S27: Step
- θ: Measurement angle

## Claims

1. An inspection apparatus for detecting a defect of a sheet-like or plate-like object having translucency, comprising:
an object holding part for holding an object;
an auxiliary member holding part for holding a sheet-like or plate-like image pickup auxiliary member to be parallel to said object;
a lighting part for emitting observation light to said object;
an image pickup part disposed on the opposite side to said object with said image pickup auxiliary member interposed therebetween, having an optical axis parallel to a normal direction of said object, for acquiring a picked-up image by picking up an image formed on said image pickup auxiliary member with said observation light transmitted through said object; and
a defect detection part for detecting a defect of said object on the basis of said picked-up image,
wherein a defect detectable by said defect detection part includes:
a first periodic defect including a plurality of streaks each extending linearly along a first direction and being periodically arranged in a second direction perpendicular to said first direction on said object; and
a second periodic defect including non-streaks which are periodically arranged in said second direction on said object,
said defect detection part comprises:
a profile acquisition part for setting a plurality of inspection regions each extending linearly in parallel with said second direction at a plurality of inspection positions, respectively, in said first direction and acquiring a plurality of brightness profiles each representing a brightness change in said second direction, in said plurality of inspection regions, respectively, in said picked-up image; and
a periodic defect discrimination part for detecting a periodic brightness variation for each of said plurality of brightness profiles, to determine that a first periodic defect exists when a periodic brightness variation with the same cycle exists common to said plurality of brightness profiles and determine that a second periodic defect exists when a periodic brightness variation with the same cycle as that of a periodic brightness variation existing in one of said plurality of brightness profiles does not exist in the other brightness profiles.

2. The inspection apparatus according to claim 1, wherein
said defect detectable by said defect detection part further includes a non-periodic defect which is a scratch or a deposit on a surface of said object or a mixture mixed into said object, and
said defect detection part further comprises:
a non-periodic defect discrimination part for detecting a non-periodic brightness variation in at least one brightness profile among said plurality of brightness profiles and determining said non-periodic brightness variation as a non-periodic defect.

3. The inspection apparatus according to claim 2, further comprising:
a rotation mechanism for relatively rotating said object, said image pickup auxiliary member, and said image pickup part about respective rotation axes perpendicular to an optical axis of said lighting part relative to said optical axis of said lighting part while maintaining a distance between said object and said image pickup auxiliary member in an optical axis direction of said lighting part and a distance between said image pickup auxiliary member and said image pickup part in an optical axis direction of said image pickup part, to thereby change a measurement angle which is an angle formed by said optical axis of said lighting part and said normal direction of said object; and
a control part for controlling said image pickup part and said rotation mechanism, to thereby cause said image pickup part to acquire said picked-up image for defect detection performed by said periodic defect discrimination part while determining said measurement angle as a predetermined first measurement angle, and to thereby cause said image pickup part to acquire said picked-up image for defect detection performed by said non-periodic defect discrimination part while determining said measurement angle as a predetermined second measurement angle different from said first measurement angle.

4. The inspection apparatus according to claim 2, further comprising:
a moving mechanism for relatively moving said image pickup auxiliary member and said image pickup part relative to said object in an optical axis direction of said lighting part while maintaining a distance between said image pickup auxiliary member and said image pickup part in an optical axis direction of said image pickup part, to thereby change a projection distance which is a distance between said image pickup auxiliary member and said object in said optical axis direction of said lighting part; and
a control part for controlling said image pickup part and said moving mechanism, to thereby cause said image pickup part to acquire a plurality of picked-up images having different projection distances, respectively,
wherein said non-periodic defect includes:
a first non-periodic defect which is a scratch or a deposit on a surface of said object; and
a second non-periodic defect which is a mixture mixed into said object,
said profile acquisition part sets an inspection region extending linearly in parallel with said second direction at a predetermined inspection position in said first direction for each of said plurality of picked-up images and acquires a brightness profile representing a brightness change in said second direction in said inspection region,
said defect detection part further includes an evaluation value calculation part for detecting a non-periodic brightness variation in said brightness profile of one picked-up image among said plurality of picked-up images and obtaining an evaluation value of said non-periodic brightness variation for each of said plurality of picked-up images, and
said non-periodic defect discrimination part determines that said non-periodic defect is said first non-periodic defect when an evaluation value variation index indicating a degree of variation of said evaluation value in said plurality of picked-up images with respect to said non-periodic brightness variation is not larger than a predetermined threshold value and determines that said non-periodic defect is said second non-periodic defect when said evaluation value variation index is larger than said threshold value.

5. The inspection apparatus according to claim 4, further comprising:
a rotation mechanism for relatively rotating said object, said image pickup auxiliary member, and said image pickup part about respective rotation axes perpendicular to an optical axis of said lighting part relative to said optical axis of said lighting part while maintaining a distance between said object and said image pickup auxiliary member in an optical axis direction of said lighting part and a distance between said image pickup auxiliary member and said image pickup part in an optical axis direction of said image pickup part, to thereby change a measurement angle which is an angle formed by said optical axis of said lighting part and said normal direction of said object,
wherein said control part controls said image pickup part, said moving mechanism, and said rotation mechanism, to thereby acquire a plurality of picked-up images having different projection distances, respectively, at each of a plurality of measurement angles,
said profile acquisition part acquires a plurality of brightness profiles from said plurality of picked-up images for each of said plurality of measurement angles,
said evaluation value calculation part obtains a plurality of evaluation values of said non-periodic brightness variation from said plurality of picked-up images for each of said plurality of measurement angles, and
said evaluation value variation index is obtained on the basis of a variation of said plurality of evaluation values at each of said plurality of measurement angles.

6. The inspection apparatus according to claim 2, wherein
said non-periodic defect includes:
a first non-periodic defect which is a scratch or a deposit on a surface of said object; and
a second non-periodic defect which is a mixture mixed into said object,
said non-periodic brightness variation includes:
a lower peak which is a downward peak; and
a first upper peak and a second upper peak which are upward peaks adjacent to both sides of said lower peak,
assuming an upward half amplitude and a downward half amplitude of brightness variation in said at least one brightness profile as a1 and a2, respectively, a brightness difference between said first upper peak and background brightness a0 as b, and a brightness difference between said second upper peak and said background brightness a0 as c,
said non-periodic defect discrimination part determines that a non-periodic defect corresponding to said non-periodic brightness variation is said first non-periodic defect when b and c are each not larger than Max (a1, a2) indicating a larger one among a1 and a2 in said non-periodic brightness variation, and determines that a non-periodic defect corresponding to said non-periodic brightness variation is said second non-periodic defect when at least one of b and c is larger than Max (a1, a2).

7. An inspection apparatus for detecting a defect of a sheet-like or plate-like object having translucency, comprising:
an object holding part for holding an object;
an auxiliary member holding part for holding a sheet-like or plate-like image pickup auxiliary member to be parallel to said object;
a lighting part for emitting observation light to said object;
an image pickup part disposed on the opposite side to said object with said image pickup auxiliary member interposed therebetween, having an optical axis parallel to a normal direction of said object, for acquiring a picked-up image by picking up an image formed on said image pickup auxiliary member with said observation light transmitted through said object;
a moving mechanism for relatively moving said image pickup auxiliary member and said image pickup part relative to said object in an optical axis direction of said lighting part while maintaining a distance between said image pickup auxiliary member and said image pickup part in an optical axis direction of said image pickup part, to thereby change a projection distance which is a distance between said image pickup auxiliary member and said object in said optical axis direction of said lighting part;
a defect detection part for detecting a defect of said object on the basis of said picked-up image; and
a control part for controlling said image pickup part and said moving mechanism, to thereby cause said image pickup part to acquire a plurality of picked-up images having different projection distances, respectively,
wherein a defect detectable by said defect detection part includes:
a first non-periodic defect which is a scratch or a deposit on a surface of said object; and
a second non-periodic defect which is a mixture mixed into said object,
said defect detection part comprises:
a profile acquisition part for setting an inspection region at a predetermined inspection position in a first direction, which extends linearly in parallel with a second direction perpendicular to said first direction, for each of said plurality of picked-up images and acquiring a brightness profile representing a brightness change in said second direction in said inspection region;
an evaluation value calculation part for detecting a non-periodic brightness variation in said brightness profile of one picked-up image among said plurality of picked-up images and obtaining an evaluation value of said non-periodic brightness variation for each of said plurality of picked-up images; and
said non-periodic defect discrimination part for determining that said non-periodic defect is said first non-periodic defect when an evaluation value variation index indicating a degree of variation of said evaluation value in said plurality of picked-up images with respect to said non-periodic brightness variation is not larger than a predetermined threshold value and determines that said non-periodic defect is said second non-periodic defect when said evaluation value variation index is larger than said threshold value.

8. The inspection apparatus according to claim 7, further comprising:
a rotation mechanism for relatively rotating said object, said image pickup auxiliary member, and said image pickup part about respective rotation axes perpendicular to an optical axis of said lighting part relative to said optical axis of said lighting part while maintaining a distance between said object and said image pickup auxiliary member in an optical axis direction of said lighting part and a distance between said image pickup auxiliary member and said image pickup part in an optical axis direction of said image pickup part, to thereby change a measurement angle which is an angle formed by said optical axis of said lighting part and said normal direction of said object,
wherein said control part controls said image pickup part, said moving mechanism, and said rotation mechanism, to thereby acquire a plurality of picked-up images having different projection distances, respectively, at each of a plurality of measurement angles,
said profile acquisition part acquires a plurality of brightness profiles from said plurality of picked-up images for each of said plurality of measurement angles,
said evaluation value calculation part obtains a plurality of evaluation values of said non-periodic brightness variation from said plurality of picked-up images for each of said plurality of measurement angles, and
said evaluation value variation index is obtained on the basis of a variation of said plurality of evaluation values at each of said plurality of measurement angles.

9. An inspection apparatus for detecting a defect of a sheet-like or plate-like object having translucency, comprising:
an object holding part for holding an object;
an auxiliary member holding part for holding a sheet-like or plate-like image pickup auxiliary member to be parallel to said object;
a lighting part for emitting observation light to said object;
an image pickup part disposed on the opposite side to said object with said image pickup auxiliary member interposed therebetween, having an optical axis parallel to a normal direction of said object, for acquiring a picked-up image by picking up an image formed on said image pickup auxiliary member with said observation light transmitted through said object;
a rotation mechanism for relatively rotating said object, said image pickup auxiliary member, and said image pickup part about respective rotation axes perpendicular to an optical axis of said lighting part relative to said optical axis of said lighting part while maintaining a distance between said object and said image pickup auxiliary member in an optical axis direction of said lighting part and a distance between said image pickup auxiliary member and said image pickup part in an optical axis direction of said image pickup part, to thereby change a measurement angle which is an angle formed by said optical axis of said lighting part and said normal direction of said object; and
a defect detection part for detecting a defect of said object on the basis of said picked-up image.

10. The inspection apparatus according to claim 9, further comprising:
a moving mechanism for relatively moving said image pickup auxiliary member and said image pickup part relative to said object in said optical axis direction of said lighting part while maintaining a distance between said image pickup auxiliary member and said image pickup part in said optical axis direction of said image pickup part, to thereby change a projection distance which is a distance between said image pickup auxiliary member and said object in said optical axis direction of said lighting part.

11. The inspection apparatus according to any one of claims 1 to 10, wherein
said lighting part comprises:
a light source part; and
a lens for converting light from said light source part into said observation light which is parallel light, to emit said observation light onto said object,
wherein a distance between said lens and said image pickup auxiliary member in an optical axis direction of said lighting part is not smaller than a half of focal length of said lens.
